(19) Europäisches Patentamt
European Patent Office
Office européen des brevets

(11) EP 1 265 173 A1

(12) **EUROPEAN PATENT APPLICATION**


(43) Date of publication:
**11.12.2002 Bulletin 2002/50**

(51) Int Cl.[7]: **G06F 17/60**

(21) Application number: **02012244.6**

(22) Date of filing: **03.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.06.2001 JP 2001168281**



(71) Applicant: **Suganuma, Shigeru**
**Higashimurayama-shi, Tokyo, 189-0024 (JP)**

(72) Inventor: **Suganuma, Shigeru**
**Higashimurayama-shi, Tokyo, 189-0024 (JP)**

(74) Representative: **Becker Kurig Straus**
**Patentanwälte**
**Bavariastrasse 7**
**80336 München (DE)**


(54) **Time series data management method, information disclosing apparatus, and information recording means**


(57) Time series raw data D is regularized by a monitor curve $SY_t$, as equivalent to the differential curve of D, made up of trend values calculates in interval expanded consecutingly, trend classification of arbitrary points $SY_t$, are defined to Fn=H(L), ascend(descend) zone, then extracting an object having locus that matches a management purpose, omitting visual chart reading process.


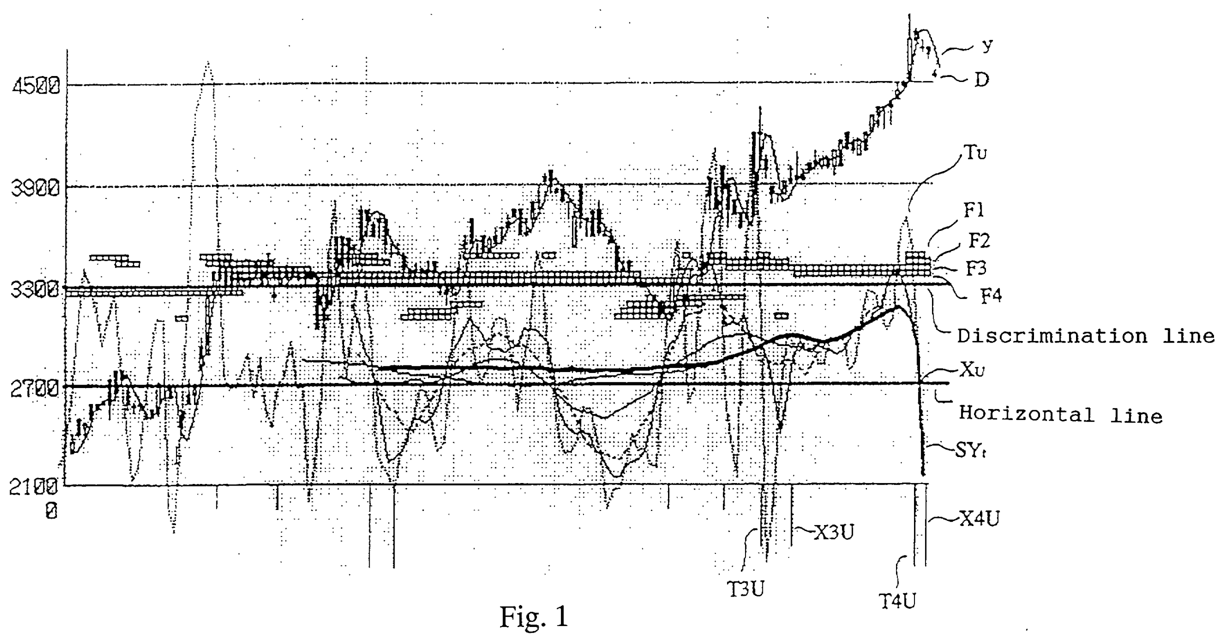


Fig. 1

EP 1 265 173 A1

## Description

This application claims the Paris convention priority of Japanese patent application 2001-168281 filed on June 4, 2001, the entire disclosure of which is incorporated herein by reference.

BACKGROUND OF THE INVENTION

1. Field of the Invention

Many of phenomenon concerning so-called management including various problems on enterprise administration are analyzed and accommodated by charging the data given in the form of a time series. The present invention applies to all the fields using such time series data. The present invention specifically applies to computer management, informed about trend behavior up to now, changes and abnormality from the time series-wise occurring data in all the fields such as retailer POS information, price information of stock, exchange, commodity markets, or such items of science observation, environments monitoring, and health control.

Since time series data is applied in a wide range of fields, in the following description the present invention mainly exemplifies stock trading, picks up a stock name as an object, and also uses stock trading terms comprehensively and so redefines the terms in a field other than stock trading as follows so that they may match the purpose of managing the time series data.

Market: Department where time series data occurs; stock market, exchange market, commodity market, enterprise, etc.
Stock price: Time series raw data D ; money amount, quantity, exchange rate, index, etc.
Current price: the latest one of the above-mentioned stock prices
Current moment: Moment that matches current price t
Stock name (object): Individual object name of time series data; item, chain store, stock, currency, commodity name, management department name, etc.
Extreme value $X_U$ ($X_L$): Value of a point where a tangent line of a time series data locus levels off, maximal/minimal value in the vicinity
Approach mark $T_U$ ($T_L$) ; approach warning signal to Extreme value $X_U$ ($X_L$)
Interval: Number of data in a time series range used in calculation of time series trend value
Monitor curve $SY_t$: Curve made up by stock price trend value calculated from an interval consecutively increased as dating back from the current moment, equivalent to differential curve of raw data time series D
N wave: Hovering zone of stock price time series locus
H (L) wave: Waveform of a stock price out of a hovering zone and continuously ascending (descending) and then hitting a peak (bottom)

2. Description of the Related Art

Digital data occurring as time elapses is charted time series-wise in order to recognize the informed contents of locus, from a past moment up to the current moment, of its behavior of changes in quantity and a correlation between the past moment and the current moment.
The information , that is;

1) Macro trend position (level) of the current moment; An Analysis period is prolonged to some extent to recognize an inclination of trends, that is whether the trends ascend or descend rightward; and
2) near future recognition with an emphasis placed on directly present moment movement; position (level) on a current short-period wave and its momentum.

Such information given visually is, in an analog manner, "utilized, after going along a macroscopic ascending (descending) trend in the human brain, to recognize a position, a direction, and a magnitude of a variable vector at the directly present moment instantaneously". However in the procedure of checking a chart actually, it is physically impossible to check all charts for every each time when new data is added if there are many objects to be managed. On top of that, even if a macroscopic trend could be visually recognized through the charts, a direction in changes at the current behavior is unclear because it is affected by noise contained in the data. A transition at the present moment, which is the most important, can be known only later.

Conventional studies on a time series have mainly focused on looking for formula which matches a locus of the time series to thereby predict a future value based on a regularity of the formula, so that the directly present data, most valuable, has been used as ordinary data, thus not considering to emphasize current behavior. Such a present situation is extremely unsatisfactory from such a viewpoint of the purpose of time series data management as to take into account a change from a past moment up to the current moment to thereby clearly know a current situation of the present moment to be managed and recognize a directly present directivity, thus extracting abnormality or creeping crisis and thereafter solving the problems.

In one example of the quantitative problems of an object, the number of stock brands subject to transaction in the domestic stock market is about 3500, further more an up-to-now locus of each of the brands changes over a ascending (descending) zone, a peak (bottom) hitting zone, a hovering zone, a spurting zone, etc. each time new data is added. An investor can watch a stock price chart to select objects for investment but within a limited monitor range everyday. Furthermore, of the ever increasing POS data of a few thousands of items dealt with in a convenience store, such data must be extracted and utilized just on time as survey information about items which hit the peak, items continuously decreasing in sale, and items which suddenly started to sell and also objects to be accommodated. Problematic ones of many franchise chain stores which can be known from a sale trend can be extracted only on the informed contents that a change in each time series chart should be analyzed. Generally, conventional technologies have been such as to utilize ABC management charts etc. introduced in quality control to thereby narrow down the objects or to check the chart of only limited objects based on comparison between a certain past moment and the current moment, so that not all phenomenon can be managed. Moreover, there has been no such a method intended by the present invention available, operated by computer except visual chart reading process as "perform a method for permitting a person to watch on a chart and understand and decide macroscopic and microscopic changes in vector of locus indicated together with addition of new data of time series and, further, that for indicating a directly current behavior in vector clearly."

<Reference Literature>

1 TIME SERIES MODELS by A.C. Harvey, published by Tokyo University Publication Association
2 DEMAND PREDICTION AND TIME SERIES ANALYSIS, published by Japan Productivity Headquarters

<Related Patent>

3 USP 6,289,321 "Device to Detect Stock Names Having the highest Current Value"

SUMMARY OF THE INVENTION

It is an object of the present invention to overcome the above-mentioned disadvantages and the unsatisfactory points of the conventional technologies. As such, time series digital data is "understanding, after going along a macroscopic, conceptual, and vague ascending (descending) trend present in the human brain to regularize an image, to recognize a position, a direction, and a magnitude of a variable vector at the directly present moment" to be operated by computer, omitting the chart reading process, decide a pattern in order to select a stock brand (object) that matches a management purpose and, further for verification, develop in a chart the extracted stock brand (object), thus obtaining a method for confirming a state where a locus thereof matches a demanded condition, simply and clearly in a visual manner.

The following means was employed in the time series data management (regularization, selection, etc. ) method and the information disclosing apparatus and the recording means. Note here that a stock brand is picked up as one example of the object and is mainly described as follows.

[1] About claims 1~8

Present invention is regulation method and apparatus by operations a time series value D when selecting an object (stock brand) indicating an extreme value or its previous value, of regularized and classified loci drawn by a series of time series data D , or a locus object (stock brand) specified for management from a group of many objects (stock brands) each time new data is added and applied and then presenting it as a discussion material for management:

1) a smoothing y time series and a short period moving trend value b1 time series induced in a short period interval p+1 are calculated;
2) such a monitor curve $SY_t$ is assumed as to be made up of trend values calculated in intervals expanded arithmetic progression-wise by multiplying it by 2*n from the short period interval p+1 dating back from the current moment;
3) preferably an arbitrary constant moment Sn is set on the monitor curve $SY_t$ with the value of n as set to 5 in actual procedure, so that Sn=S1, S2, S3, S4, and S5 correspond, in one example, to moments t-1/2p, t-p, t-2p, t-4p, and t-8p respectively dating back from the current moment t, hereinafter, n is assumed to be 5 in the main embodiment for easy explanation;
4) a time series locus of an arbitrary constant moment S1 on the curve $SY_t$ is used to calculate a moving trend value b1 time series induced in the short period interval p+1, a time series locus of the constant moment S2 is used to calculate a moving trend value b2 time series induced in the interval 2p+1, a time series locus of the constant moment S3 is used to calculate a moving trend value b3 time series induced in the interval 4p+1, a time series locus of the constant moment S4 is used to calculate a moving trend value b4 time series induced in the interval 8p+1, and a time series locus of the constant moment S5 is used to calculate a moving trend value b5 time series induced in the interval 16p+1.
5) each of the locus b1 of the constant moment S1, the locus b2 of the constant moment S2, the locus b3 of the constant moment S3, the locus b4 of the constant moment S4, and the locus b5 of the constant moment S5 is standardized to B1, B2, B3, B4, and B5 time series respectively;

6) classification time series F1, F2, F3, F4, F5=H(L) are calculated of a period from a moment when each of the standardized time series B1, B2, B3, B4, B5 beyond (below) the upper classification line $V_U$ (lower classification line $V_L$) up to a moment when each of the corresponding b1, b2, b3, b4, and b5=0 respectively;

7) to determine the last term of a classification time series {$Fn_t$: $F1_t$, $F2_t$, ...}, a pattern group of the constant moments {Sn: S1, S2, ...} of the monitor curve $SY_t$ is determined to standardize a zone classification of smoothing time series (y)

8) the b1, b2, b3, b4, b5 moving trend values, the B1, B2, B3, B4, B5 standardized values, and the F1, F2, F3, F4, and F5 classification time series are called from the memory in the time series.

At a moment when $B1_{t-2}<B1_{t-1}>B1_t$ and $B1_t>V_U$, an approach signal OP\$=$T_U$ is detected, and at a moment when $B1_{t-2}>B1_{t-1}<B1_t$ and $B1_t<V_L$, an approach signal OP\$=$T_L$ is detected. In this case, $V_U$ ($V_L$) is given using one standard deviation σ;

9) in the case where $b1_t$ intersects a horizontal line, that is SGN($b1_{t-1}$)<>SGN($b1_t$), and upper(lower) extreme value OP\$=$X_U$ (OP\$=$X_L$) is detected for stock brand that the approach signal OP\$=$T_U$ (OP\$=$T_L$) is already detected.

10) the approach signal $T_U$ ($T_L$) is detected at the current moment and if $F2_t$=H ($F2_t$=L), then OP\$=$T_U$ (OP\$=$T_L$) is transformed into OP\$=T2U (OP\$=T2L), thus detecting a stock brand which ascends (descends) continuously over at least a period p until it reaches the current price,

if $F2_t$, $F3_t$=H ($F2_t$, $F3_t$=L), OP\$=T2U (OP\$=T2L) is transformed into OP\$=T3U (OP\$=T3L), to detect a stock brand which ascends (descends) continuously over at least a period 2p until it reaches the current price,
if $F2_t$, $F3_t$, $F4_t$=H ($F2_t$, $F3_t$, $F4_t$=L), OP\$=T3U (OP\$=T3L) is transformed into OP\$=T4U (OP\$=T4L), to detect a stock brand which ascends (descends) continuously over at least a period 4p until it reaches the current price, and
if $F2_t$, $F3_t$, $F4_t$, $F5_t$=H ($F2_t$, $F3_t$, $F4_t$, $F5_t$=L), OP\$=T4U (OP\$=T4L) is transformed into OP\$=T5U (OP\$=T5L), thus detecting a stock brand which ascends (descends) continuously over at least a period 8p, and then these stock brands are recorded in a upper (lower) extreme value-previous stock brand file in the storage device;

11) the extreme value signal $X_U$ ($X_L$) is detected at the current moment and, if $F2_t$=H ($F2_t$=L),then OP\$=$X_U$ (OP\$=$X_L$) is transformed into OP\$=X2U (OP\$=X2L), to detect a stock brand which ascends (descends) continuously over at least a period p until it reaches the current price,

if $F2_t$, $F3_t$=H ($F2_t$, $F3_t$=L), OP\$=X2U (OP\$=X2L) is transformed into OP\$=X3U (OP\$=X3L), to detect a stock brand which ascends (descends) over at least a period 2p until it reaches the current price,
if $F2_t$, $F3_t$, $F4_t$=H ($F2_t$, $F3_t$, $F4_t$=L), OP\$=X3U (OP\$=X3L) is transformed into OP\$=X4U (OP\$=X4L), to detect a stock brand which ascends (descends) over at least a period 4p until it reaches the current price, and
if $F2_t$, $F3_t$, $F4_t$, $F5_t$=H ($F2_t$, $F3_t$, $F4_t$, $F5_t$=L), OP\$=X4U (OP\$=X4L) is transformed into OP\$=X5U (OP\$=X5L), to detect a stock brand which ascends (descends) over at least a period 8p until it reaches the current price, and then these stock brands are recorded in the upper (lower) extreme value brand stock file in the storage device;

12) a configuration of a classification {$Fn_t$: $F1_t$, $F2_t$, ..., $Fn_t$} of the constant moments {Sn: S1, S2, ..., Sn} on the assumed monitor curve $SY_t$ is specified and the relevant stock brand is selected and recorded in the file;

13) a No. of the classification {$Fn_t$: $F1_t$, $F2_t$, ..., = H } or {$Fn_t$: $F1_t$, $F2_t$, ..., = L } of the constant moments {Sn: S1, S2, ..., Sn} on the assumed monitor curve $SY_t$ is specified and the relevant stock brand is selected and recorded in the file;

14) each of the calculated y, b1~b5, B1~B5, F1~F5 time series and each of the detection marks OP\$= , are recorded in each of corresponding stock brands and stored in the recording device; and

15) after all the stock brands are detected, the upper (lower) extreme value stock brand file, the specified upper (lower) extreme value-previous stock brand file, the stock brand file defined by configuration of the classification {Fnt: $F1_t$, $F2_t$, ..., $Fn_t$}, and the stock brand file defined by No. classification $Fn_t$ =H ($Fn_t$ =L) are stored in the storage device and also output and distributed to the investors.

These steps 1) through 15) are picked up and organized as necessary to provide a method for causing a computer to select a stock brand that draws a desired time series locus, while omitting a step for deciding it in a chart each time new time series data is applied.

Furthermore, in the stock brand selection method by the present invention, it is very effective to report every detection result to the management department for added new data, and connect to a countermeasure system through such electric communication means such as the internet, a computer network, or a broadcast network.

[2] About claim 9

By a stock brand information disclosing apparatus for representing a present situation of the stock brands standardized through the steps of claims 1~6 on a display based on a mark stack state of classifications F1~F5 of each upper (lower) mark at the constant moments S1~S5 on the monitor curve $SY_t$:

1) a stock price D, its smoothing value y, moving trend values b1~b5, their standardization B1~B5, each time series of classifications F1~F5, trend values $\{g_t, g_{t-1}, g_{t-2}, ..., g_{t-n-1}\}$ constituting the monitor curve $SY_t$ are output to the memory;
2) the time series is developed and displayed on the horizontal axis, the stock price D and the smoothing value y is developed and displayed in time series on the display;
3) the monitor curve $SY_t$ $\{g_t, g_{t-1}, g_{t-2}, ..., g_{t-n-1}\}$ and each of the moving trend value time series b1, b2, b3, b4, and b5 which provide loci of the constant moments S1~S5 of this curve $SY_t$ respectively are displayed on an inherent horizontal line in the same chart in different colors as dating back from the stock price D, and the smoothing value y time series respectively by as much as each of 1/2p, p, 2p, 4p, and 8p of the time series;
4) the F5 time series is displayed on a mark band adjacent the standard classification line and the F5=H (F5=L) is displayed at the upper (lower) part of the standard line with a pre-decided-color mark on the display at the same situation of the stock price time series D and the smoothing value y time series,

the F4 time series is displayed on a mark band adjacent the F5 mark band and the F4=H (F4=L) is displayed at the upper (lower) part of the standard line with a pre-decided-color mark on the display at the same situation of the stock price time series D and the smoothing value y time series, and
similarly, the F3 time series is displayed on a mark band adjacent the F4 mark band, the F2 time series is displayed on a mark band adjacent the F3 mark band, and the F1 time series is displayed on a mark band adjacent the F2 mark band on the display with a pre-decided-color mark at the same situation of series;

5) the standardization time series B1 and the classification codes F1~F5 are developed and output in time series, so that in a region above the upper classification line $V_U$ (below the lower classification line $V_L$), on condition that $B1_{t-2}<B1_{t-1}>B1_t$ ($B1_{t-2}>B1_{t-1}<B1_t$) and, its locus is a returning point of a convex(concave),

if $F2_t$=H ($F2_t$=L), the stock brand detection classification OP$=T2U(T2L);
if $F2_t$, $F3_t$=H ($F2_t$, $F3_t$=L), the stock brand detection classification OP$=T3U(T3L);
if $F2_t$, $F3_t$, $F4_t$,=H ($F2_t$, $F3_t$, $F4_t$=L), the stock brand classification OP$=T4U(T4L); and
if $F2_t$, $F3_t$, $F4_t$, $F5_t$=H ($F2_t$, $F3_t$, $F4_t$, $F5_t$=L), the stock brand classification OP$=T5U(T5L),

such approach signal are indicated with pre-decided color and magnitude corresponding to the detection classifications OP$= at the current moment;

6) the short period moving trend value time series b1, its standardization time series B1, are the classification code time series F1~F5 are developed and output in time series, after indication of OP$=$T_U$ (OP$=$T_L$) , in the case where $b1_t$ intersects the horizontal line at the current moment, that is SGN($b1_{t-1}$) <>SGN($b1_t$) and;

if $F2_t$=H ($F2_t$=L), the stock brand detection classification OP$=X2U(X2L);
if $F2_t$, $F3_t$=H ($F2_t$, $F3_t$=L), the stock brand detection classification OP$=X3U(X3L);
if $F2_t$, $F3_t$, $F4_t$=H ($F2_t$, $F3_t$, $F4_t$=L), the stock brand classification OP$=X4U(X4L); and
if $F2_t$, $F3_t$, $F4_t$, $F5_t$=H ($F2_t$, $F3_t$, $F4_t$, $F5_t$=L), the stock brand classification OP$=X5U(X5L),

such extreme value signals are indicates on the display with pre-decided color and magnitude corresponding to the detection classifications OP$= at the current moment;

7) the extreme value or the extreme value-previous state is understood instantaneously by its signal in the last time of time series as discriminated in color; including ascend(descend) periods until the current value is reached;
8) The locus of time series behavior is understood instantaneously by a pyramid shape block of the F1~F5=H marks and a reversed pyramid shaped block of F1~F5=L marks discriminated in color, especially upper and lower zone distribution in the vicinity of the extreme point ;
9) such an overall wave is understood that a range in which the time series block-wise development of all the F1~ F5=H(F1~F5=L) marks continues is a continuously ascending H wave (descending L wave) zone based on the range of the interval calculating F1~F5 respectively;
10) Correlation of a set of marks at arbitrary moments $F1_{t-n}$, $F2_{t-n}$, $F3_{t-n}$, $F4_{t-n}$, and $F5_{t-n}$, and locus of time series D, and the smoothing value y are understood for representing their situation ;
11) Predicted method for future behavior, concerned stock price time series D, are presented by the future monitor curve $SY_{t+1}$ calculating with plu-

rality temporary stock price $D_{t+1}$,$b1_{t+1}$, $b2_{t+1}$, on a plurality of assumed monitor curves $SY_{t+1}$ and display them at the moment t+1, thus predicting a correlation with the extreme values based on the position and momentum of the assumed monitor curve $SY_{t+1}$ interconnecting the plurality of $b1_{t+1}$ and $b2_{t+1}$.

These steps 1) through 11) are picked up and organized as necessary to provide a stock brand information disclosing apparatus for visually knowing such a stock price locus that selects as extreme value/extreme value-previous stock brand or specified with zone classification {$Fn_t$: $F1_t$, $F2_t$, ..., $Fn_t$}.

[3] About claim 10

A method according to any one of claims 1-8 provides recording means for permitting contents stored therein to be read out by a machine etc. which records therein a program that standardizes a locus of an object (stock price of a stock brand etc.) to perform an object (stock brand) selection/detection method. Such recording means may come in a storage disk, storage medium such as a memory or storage device, or recording means by use of an electric communication line such as the internet, a computer network, or broadcast network.

[4] About claim 11

An information disclosing apparatus according to claim 9 provides recording means for permitting contents recorded therein to be read out by a machine etc. which records therein a program that operates a display for visually representing information about selection/detection of an object (stock brand etc.), in which the display is constituted by the information disclosing apparatus according to claim 9. This program relates to a method for representing a state where a locus of the object (stock brand etc.) is fixed to an N wave, an H wave, or an L wave or a current state where the current price indicates or approaches an extreme value based on a stack state of the classification marks F1~F5 of each upper (lower) value at the constant moments S1~S5 on the assumed monitor curve $SY_t$, thus performing steps for developing on the display in time series the trend values which make up the stock price times series D, the smoothing value y, the moving trend values b1~b5, their standardization B1~B5, each times series of classifications F1~F5, each detection mark OP$= , and the monitor curve $SY_t$ and for visually representing a state where the current price approaches a peak (bottom) extreme value.

BRIEF DESCRIPTION OF THE DRAWINGS

FIG. 1 is a chart for specifically showing a method for regularizing time series data on an apparatus according to claim 9 as part of information to be distributed, as related to the present invention;

FIG. 2 is a graph for showing correlation between a smoothing value y and a short period moving trend value b1 and $g_t$ and constant moments S1~S5 that constitute a monitor curve at a step for smoothing an raw time series value D, as related to the present invention;

FIG. 3 is a chart for showing correlation among the raw time series value D, the smoothing value y, and the monitor curve $SY_t$, as related to the present invention;

FIG. 4 is a chart for showing loci b1~b5 of the constant moments S1~S5 of the monitor curve $SY_t$ as dating back from the current moment, as related to the present invention;

FIG. 5 is a chart for showing correlation between the smoothing value y and a classification F1 and a step for deciding the F1, as related to the present invention;

FIG. 6 is a chart for showing correlation among the smoothing value y, the loci b1~b5 of the constant moments S1~S5 of the monitor curve $SY_t$, and extreme value and approach marks decided by their combinations with F1~F5 classified on the basis of the standardized time series thereof, as related to the present invention;

FIG. 7 is a chart for showing moments S2 and S1 of stock prices 4500 yen, 4600 yen, and 4700 yen assumed after the monitor curve $SY_t$ hit an extreme value in an example where a stock brand with its stock price being an extreme value is detected and displayed, as related to the present invention;

FIG. 8 is a chart for showing an example in which the present invention is applied to a dollar/yen exchange market;

FIG. 9 is a flowchart for showing main steps of a time series data management method of the present invention;

FIG. 10 is a flowchart for calculating the smoothing value y and the moving trend values b1～b5 from the stock price time series D, as related to the present invention;

FIG. 11 is a flowchart for calculating the monitor curve $SY_t$ from the stock price time series D, as related to the present invention;

FIG. 12 is a flowchart for standardizing the moving trend values b1～b5, as related to the present invention;

FIG. 13 is a flowchart for calculating time series of the classifications F1~F5 time series from time series of the moving trend values b1~b5 standardized B1~B5, as related to the present invention;

FIG. 14 is a flowchart for selecting period-specific upper (lower) extreme value and period-specific upper (lower) extreme value-previous stock brands, as related to the present invention; and

FIG. 15 is a table for listing symbols etc. used, as related to the present invention.

## DESCRIPTION OF THE PREFERRED EMBODIMENTS

The following will describe the preferred embodiment of the present invention with reference to FIG. 9 showing a main flow of a time series data management method of the present invention and FIG. 15 showing a table listing the related symbols etc. used, as related to the present invention.

Generally, a stock price time series $\{D_1, D_2, ..., D_t\text{-}1, D_t\}$ having the current price $D_t$ as its last term has the following constructional relationship between the adjacent stock prices basically:

$$(D_t-\mu)=b_{t-1}*(D_{t-1}-\mu)+\varepsilon_{t-1}(t=t, t-1,..., 2)$$

where $b_{t-1}$, $\mu$: parameter and

$\varepsilon_{t-1}$; noise term of average 0 and standard deviation $\sigma$

Each time series value is comprised of a trend value $b_t$ and a random noise term $\varepsilon_t$ applied thereon, the trend value of which is considered to be a function smooth in terms of time (see Reference Literature 1).

Smoothing of stock price time series and calculation of each moving trend value time series:

To remove irregularities of values owing to a noise term, a least-square method is used for smoothing. As shown in FIG. 2, the trend value $b1_t$ and the smoothing value $y_t$ are obtained from a regression line in a range in units of (p+1) time series of $\{D_t, D_{t-1}, ..., D_{t-p}\}$.

Furthermore, the trend value $b1_{t-1}$ and the smoothing value $y_{t-1}$ are obtained in a $\{D_{t-1}, D_{t-2}, ..., D_{t-p-1}\}$. Further, this operation is repeated until t=t-2, t-3, ..., p+1. The interval (p+1) is classified to be a short period and p+1=3 through 7 is employed generally. In an example for explanation, a daily and short periods are to be five days. Along the flowchart of FIG. 10:

$\{Y_t, y_{t-1}, ..., y_{p+1}\}$; smoothing value time series and its y curve are calculated, and

$\{b1_t, b1_{t-1}, ..., b1_{p+1}\}$; short-period moving trend value time series and its b1 curve are calculated.

Interval 2p+1 is employed to calculate $\{b2_t, b2_{t-1}, ..., b2_{2p+1}\}$; moving trend value b2 curve is calculated, interval 4p+1 is employed to calculate $\{b3_t, b3_{t-1}, ..., b3_{4p+1}\}$; moving trend value b3 curve is calculated, interval 8p+1 is employed to calculate $\{b4_t, b4_{t-1}, ..., b4_{8p+1}\}$; moving trend value b4 curve is calculated, and

interval 16p+1 is employed to calculate $\{b5_t, b5_{t-1}, ..., b5_{16p+1}\}$; moving trend value b5 curve is calculated.

Calculation of monitor curve $SY_t$:

As shown in FIG. 2, a trend value $g_t=b1_t$ is obtained from the regression line in a range in units of (p+1) time series of $\{D_t, D_{t-1}, ..., D_{t-p}\}$. Then, according to the flowchart of FIG. 11, a trend value time series $SY_t$ $\{g_t, g_{t-1}, g_{t-2}, g_{t-3}, ..., g_{t-n-1}\}$ from a regression line of (p+1+n*2) interval of $\{D_t, D_{t-1}, ..., D_{t-p-n*2}\}$. In this case, n=1, 2, 3, ..., n. The trend value time series $SY_t$ is a trend value curve equivalent as differential curve, of a stock price locus read out on a monitor curve on which an image read out by a person while watching a time series chart is reflected, as "a position and an indicated stock price vector given when the directly present current price has changed in a short period after going through a macroscopic, vague ascending (descending) trend present in the human brain".

Immediately when the monitor curve $SY_t$ turns from (-) to (+) in sign, the stock price D and the y time series continue to ascending and, immediately when the curve turns from (+) to (-) in sign, they hit an upper extreme value and, as far as the curve continues to be (-) in sign, they continues to descend and, immediately when the curve turns (+), they hit a lower extreme value. FIG. 3 shows correlation among the stock price D, the y time series, and the monitor curve $SY_t$.

$\{SY_{t-n}, SY_{t-n+1}, ..., SY_{t-1}, SY_t\}$; locus of monitor curve time series:

A change from the time series $SY_{t-n}$ to $SY_t$ is represented by an individual change of a plurality of arbitrary moments S5~S1 each of which is defined as shown in FIG. 2, as follows:

a change of S1=t-1/2p is represented by a time series locus of a moving trend value time series b1 calculated from an interval (p+1),

a change of S2=t-p is represented by a time series locus of a moving trend value time series b2 calculated from an interval (2p+1),

a change of S3=t-2p is represented by a time series locus of a moving trend value time series b3 calculated from an interval (4p+1),

a change of S4=t-4p is represented by a time series locus of a moving trend value time series b4 calculated from an interval (8p+1), and

a change of S5=t-8p is represented by a time series locus of a moving trend value time series b5 calculated from an interval (16p+1). FIG. 4 shows a timewise change of each of the constant moments S1～S5 And the b1～b5 time series.

Loci of constant moments S1, S2, S3, S4, and S5 of monitor curve $SY_t$:

As shown in FIGS. 2 and 4, on the monitor curve $SY_t$, the constant moment S1 is $b1_t$, the constant moment S2 is $b2_t$, the constant moment S3 is $b3_t$, the constant moment S4 is $b4_t$, and the constant moment S5 is $b5_t$.

Correlation among short-period moving trend value b1 time series, stock price D, smoothing time series y, and short period classification F1:

FIG. 5 is a chart for showing the stock price smoothing y developed in time series and also the short period moving trend value b1 developed in time series as shifted by dating back by 1/2p. Specifically, according to the flowchart of FIG. 12, the short period moving trend value $\{b1_t, b1_{t-1}, ..., b1_1\}$ is standardized to obtain a B1 standardized curve of $\{B1_t, B1_{t-1}, ..., B1_1\}$. A period in which the locus up to $B1_t$ further increases (or decelerates) from, as an origin point, a moment when it exceeds the upper classification line $V_U$ (lower classification line $V_L$), that is, a standard deviation in the example and then is inverted/decelerated (accelerated) until its trend value b becomes 0 is defined to be an upper value classification F1=H (lower value classification F1=L) of the B standardized curve and the short moving trend value b1 curve. A locus of the corresponding stock price is continuously ascends (descends) from the above-mentioned origin point so that the final moment of F1=H (L) may provide an extreme value. Assuming a moment when $B1_t$ has reached a trend value $b_t$=0 from the upper classification F1=H of the B standardized curve to be $X_U$, $y_{t-2/p}$ of the y curve indicates a maximal value and the moment $X_L$ when $b_t$=0 is reached from the classification F1=L indicates a minimal value and also a folding back moment $T_U$ ($T_L$) of the B standardized curve in excess of the upper classification line $V_U$ (lower classification line $V_L$) as dated back from that moment $X_U$ ($X_L$) is detected as an approach signal .

Detection of upper value classification F=H (lower value classification F=L) of moving trend value b2, b3, b4, and b5 curves:

According to the flowchart of FIGS. 12 and 13, the following curves are calculated:

$\{b2_t, b2_{t-1}, ..., b2_{2p+1}\} \rightarrow \{B2_t, B2_{t-1}, ..., B2_{4p+1}\}$; B2 standardized curve;
$\{ b3_t, b3_{t-1}, ..., b3_{4p+1}\} \rightarrow \{B3_t, B3_{t-1}, ..., B3_{4p+1}\}$: B3 standardized curve;
$\{b4_t, b4_{t-1}, ..., b4_{8p+1}\} \rightarrow \{B4_t, B4_{t-1}, ..., B4_{8p+1}\}$; B4 standardized curve; and
$\{b5_t, b5_{t-1}, ..., b5_{16p+1}\} \rightarrow \{B5_t, B5_{t-1}, ..., B5_{16p+1}\}$; B5 standardized curve.

FIG. 6 is a chart for showing, addition to the contents of FIG. 5, correlation among the stock price y curve, the moving trend value curves b2, b3, b4, and b5, and the classification symbols F1, F2, F3, F4, and F5. A period in which a locus up to $B2_t$, $B3_t$, $B4_t$, or $B5_t$ increases (decreases) from, as the origin point, a moment when it exceed the upper classification line $V_U$ (lower classification line $V_L$) and then is inverted and decelerated (accelerated) until its trend value b2, b3, b4, b5 may become 0 respectively is defined to be an upper value classification F2, F3, F4, F5=H (lower value classification F2, F3, F4, F5=L) of the B2, B3, B4, B5 standardized curve and the moving trend value b2, b3, b4, b5 curve respectively.

Detection of stock value that the current price thereof is at an extreme value or an extreme-previous value, flowchart of FIG. 14:

Such an extreme value stock brand is detected that its price ascends (descends) for at least a period of p if the extreme value signal OP$=$X_U$ ($X_L$) is detected at the constant moment S1 of the monitor curve $SY_t$, that is, $b1_t$ and the classification $F2_t$=H (L) at the constant moment S2, that is, $b2_t$, further ascends (descends) for at least a period of 2p if the classification $F3_t$=H (L) at the constant moment S3, that is $b3_t$, further ascends (descends) for at least a period of 4p if the classification $F4_t$=H (L) at the constant moment S4, that is $b4_t$, and further ascends (descends) for at least a period of 8p if the classification $F5_t$=H (L) at the constant moment S5, that is $b5_t$.

Such an extreme value-previous stock brand is detected that its price ascends (descends) for at least a period of p if the approach signal OP$=$T_U$($T_L$) is detected at the constant moment S1 of the monitor curve $SY_t$, that is, $b1_t$ and the classification $F2_t$=H (L) at the constant moment S2, that is, $b2_t$, further ascends (descends) for at least a period of 2p if the classification $F3_t$=H (L) at the constant moment S3, that is $b3_t$, further ascends (descends) for at least a period of 4p if the classification $F4_t$=H (L) at the constant moment S4, that is $b4_t$, and further ascends (descends) for at least a period of 8p if the classification $F5_t$=H (L) at the constant moment S5, that is $b5_t$.

Classification of time series stock price D, smoothing value y locus classification:

"Determination step of the latest term classification $\{Fn_t$: $F1_t$, $F2_t$, ...}", transit to "determination of constant moments {Sn: S1, S2, ...} of assumed monitor curve $SY_t$", "determination of pattern group of the relevant stock prices time series D", and "regularization of pattern group of stock price loci of all stock brands" are performed in this order. A configuration or number of the classification $\{Fn_t$: $F1_t$, $F2_t$, ...} is set beforehand so that they may be defined to the relevant zone stock brand group respectably.

Creation, storage, and distribution of a file consist of relevant stock brand detected from all stock brands :

A file of higher extreme value stock brands, lower extreme value stock brands, higher extreme value-previous stock brands, lower extreme value-previous stock brands, or stock brands detected in a preset configuration of {$Fn_t$: $F1_t$, $F2_t$, ...} is created and stored in the storage device and then distributed.

PRACTICE OF PRESENT INVENTION

FIG. 9 is a flowchart for showing a main flow of the present invention. The current price $D_{t+1}$ of each stock brand acquired through communication or any other transmission media is added as the last term of a time series {$D_t$, $D_{t-1}$, ..., $D_1$} reproduced and output from the storage device to thereby configurate a new times series {$D_t$, $D_{t-1}$, ..., $D_1$}. By the operating unit:

1) according to the flowchart of FIG. 10, the stock price time series is smoothed in a short interval of p+1 to calculate the y smoothed stock price time series and the b1 short period moving trend value time series, which are then stored in the memory;
2) according to the flowchart of FIG. 10, the b2, b3, b4, and b5 moving trend value time series are calculated in intervals 2p+1, 4p+1, 8p+1, and 16p+1 respectively and then stored in the memory;
3) according to the flowchart of FIG. 12, the b1, b2, b3, b4, and b5 moving trend value time series are standardized for each time series to calculate B1, B2, B3, B4, and B5 standardized time series, which are then stored in the memory;
4) according to the flowchart of FIG. 11, as dating back from the current moment, trend values are calculated in intervals {$D_t$, $D_{t-1}$, ..., $D_{t-p-2^*n}$} expanded arithmetic progression-wise from the short interval of p+1 by multiplying it by n*2 consecutively. As many as n number (n=0, 1, 2,, 3, ..., n) of time series monitor curves $SY_t$ are calculated up to the current moment and stored in the memory;
5) according to the flowchart of FIG. 14, the b1, b2, b3, b4, and b5 moving trend value time series and the B1, B2, B3, B4, and B5 standardized time series are read out and developed on the memory or the display. At a moment when $B1_{t-1}<B1_t>B1_{t+1}$ and $B1_t$ goes above the upper classification line $V_U$ and its locus turns in a convex manner, the approach signal OP$=$T_U$ is detected, at a moment when $B1_{t-1}>B1_t<B1_{t+1}$, that is, the $B1_t$ goes below the decision line $V_L$ and its locus turns in a concave manner, the approach signal OP$=$T_L$ is detected and, if it is not detected then OP$="". If $b_t$=0 after the approach signal $T_U$ was detected, the upper extreme value signal $X_U$ is detected and stored in the memory, while when $b_t$=0 after the approach signal $T_L$ was detected, the lower extreme value signal $X_L$ is detected and stored in the memory.
According to the flowchart of FIG. 13,from a moment when the B1, B2, B3, B4, B5 reference value beyond (below) the upper classification line $V_U$ (lower classification line $V_L$) of each time series is used as an origin moment to a period required for each of the corresponding time series b1, b2, b3, b4, and b5 to become 0 classification is defined F1, F2, F3, F4, F5=H ( F1, F2, F3, F4, F5=L), which is then stored in the memory;
6) according to the flowchart of FIG. 14, a period in which the price ascends (descends) until it reaches the current price $D_t$ is detected. If the last term of classification time series is F2=H (L), the OP$=$T_U$ ($T_L$) is transformed into OP$=T2U (T2L) or OP$=$X_U$ ($X_L$) is transformed into OP$=X2U (X2L), to detect and store in the memory a stock brand which ascends (descends) for at least a period of p, from the moment S2 of the monitor curve $SY_t$ ;

if F2, F3=H (F2, F3=L), OP$=T2U (T2L) is transformed into OP$=T3U (T3L) or OP$=X2U (X2L) is transformed into OP$=X3U (X3L), to detect and store in the memory a stock brand which ascends (descends) for at least a period of 2p from the moment S3 of the monitor curve $SY_t$, to the current price is reached;
if F2, F3, F4=H (F2, F3, F4=L), OP$=T3U (T3L) is transformed into OP$=T4U (T4L) or OP$=X3U (X3L) is transformed into OP$=X4U (X4L), to detect and store in the memory a stock brand which ascends (descends) for at least a period of 4p from the moment S4 of the monitor curve $SY_t$, to the current price is reached; and if F2, F3, F4, F5=H (F2, F3, F4, F5=L), OP$=T4U (T4L) is transformed into OP$=T5U (T5L) or OP$=X4U (X4L) is transformed into OP$=X5U (X5L), to detect and store in the memory a stock brand which ascends (descends) for at least a period of 8p from the moment S5 of the monitor curve $SY_t$, to the current price is reached;

Selection of stock brand by means of specification of combinations of zone classifications of constant moments of monitor curve:

Example 1; $F1_t$, $F2_t$, $F3_t$, $F4_t$, $F5_t$="HHHHH" ("LLLLL") is provided in zone setting to detect and store in the memory such a time series stock brand as continuing to ascend (descend) for at least a period of 8p. Example 2; $F1_t$, $F2_t$, $F3_t$, $F4_t$, $F5_t$="LL***" is provided in zone setting to detect and store in the memory such a time series stock brand as reacting for at least a period of p after having asceding. In this case, "*" is " " or "H". Example 3; $F1_t$, $F2_t$, $F3_t$, $F4_t$, $F5_t$="HHNNN" ("LLNNN")

is provided in zone setting to detect and store in the memory such a time series stock brand as having changed to ascend (descend) for at least a period of p after having continued to hover in a specified configuration that corresponds to a purpose. In this case "N" is "". Example 4; $F1_t$, $F2_t$, $F3_t$, $F4_t$, $F5_t$="H" ("L")*(4 or larger) is set to detect and store in the memory a zone stock brand near an extreme value from among those that continues to ascend (descend) for at least a period of 4p.

The $D_t$, $Y_t$, $b1_t$, $b2_t$, $b3_t$, $b4_t$, $B1_t$, $B2_t$, $B3_t$, $B4_t$, $B5_t$, $F1_t$, $F2_t$, $F3_t$, $F4_t$, $F5_t$, and OP$= signals are recorded in the relevant stock brand in the storage device.

In the storage device are established the files of the approach signal-detected ascending /descending stock brands, the extreme value signal-detected ascending /descending stock brands, and any other condition-set stock brands and also stored the relevant code numbers. They are distributed through the internet, broadcasting, and facsimile and other information transmission media.

Chart for visually disclosing standardization of time series data and its process: FIG. 1.

The files of the approach signal-detected ascending/descending stock brands, the extreme value signal-detected ascending /descending stock brands, and any other condition-set stock brands are opened to specify a desired stock brand in a list thereof or a combination of the classifications $F1_t$, $F2_t$, $F3_t$, $F4_t$, and $F5_t$ of the constant moments S1, S2, S3, S4, and S5 of the monitor curve $SY_t$ to thereby call the relevant stock brand from the storage device.

1) The time series of D, y, b1, b2, b3, b4, b5, B1, B2, B3, B4, B5, F1, F2, F3, F4, F5, and $SY_t$ and the OP$= signal are read out from the storage device and stored in the memory.
2) Raw data D, smoothing value y time series chart is created on the display, in which the horizontal axis indicates a time series ; FIG. 3.
3) A monitor curve $SY_t$ is calculated in intervals $\{D_t, D_{t-1}, ..., D_{t-p-2*n}\}$ expanded arithmetic progression-wise from the short interval of p+1 by multiplying it by n*2 consecutively and read in. In this case, n=0, 1, 2, 3, ..., n. Time series are displayed on parallel horizontal line as dating back by 1/2p; FIG. 3.
The moving trend value time series b1, b2, b3, b4, and b5 are displayed in different colors on the horizontal line in the chart as dating back from the stock price D time series and the smoothing value y time series by as much as 1/2p, p, 2p, 4p, and 8p respectively; FIG. 4.
4) The classification series is displayed above(below) for F=H (F=L), in such a configuration that the higher value region is divided into F1, F2, F3, F4, and F5 classification bands and the lower value region is divided into F5, F4, F3, F2, and F1 classification bands in this order downward ; FIG. 6.
5) When the upper value (lower value) approach signal stock brand classification OP$=T2U, T3U, T4U, T5U (OP$=T2L, T3L, T4L, T5L) is detected, an approach mark with a color and a magnitude corresponding to each classification OP$= is displayed on the vertical axis at the relevant time series moment.
When the upper value (lower value) extreme value signal stock brand classification OP$=X2U, X3U, X4U, X5U (OP$=X2L, X3L, X4L, X5L) is detected, an extreme value mark with a color and a magnitude corresponding to each classification OP$= is displayed on the vertical axis at the relevant time series moment; FIG. 6.
6) A plurality of stock prices $D_{t+1}$ is assumed centering around a current price $D_t$ to calculate $b1_{t+1}$ and $b2_{t+1}$ by the operating unit. Then, constant moments S1 and S2 of a plurality of monitor curves $SY_{t+1}$ is calculated on a trial basis and displayed; FIG. 7.

Correlation among curves and symbols on display:

1) If the stock price D, y time series ascend continuously from a moment when the monitor curve $SY_t$ turns from (-) to (+) in sign and hits an upper extreme value at a moment when it turns from (+) to (-). The stock price D, y time series descend continuously to fall as far as it continues to be (-), thus hitting a lower extreme value.
2) A time series change between the monitor curve time series $SY_t$ and $SY_{t-n}$ (n=1, 2, ..., n) is represented by a change in the b1, b2, b3, b4, and b5 time series of each moving trend value indicating a time-wise change of the preset constant moments S1, S2, S3, S4, and S5 of the monitor curve time series SY and "H" and "L" of their classifications F1, F2, F3, F4, and F5.
3) The classification mark of $F2_t$, $F3_t$, $F3_t$, $F4_t$, $F5_t$ presented at the last term of time series indicates a classification of a preset constant moment of the monitor curve $SY_t$, so that a combination thereof alone makes it possible to rapidly know a behavior of the stock price; for example, if the $F1_t$~$F5_t$ marks are displayed as stacked below the reference line, the stock price D can be known to descend continuously at least for a period of 8P. If the upper value mark of $F1_t$ disappears and $F2_t$-$F4_t$ marks are displayed as stacked on the reference line, the stock price D can be known to be at an extreme value after having ascending continuously for at least a period of 4P; FIG. 7.
4) The stock price D, y locus is known currently by an approach and an extreme value mark for each color and a magnitude preset for each ascending (descending ) period.

5) A plurality of temporary stock prices $D_{t+1}$ to execute a plurality of monitor curves $SY_{t+1}$, thus investigating a correlation between the temporary stock price $D_{t+1}$ and the extreme stock price value.

<Examples>

FIG. 7 shows one example where the present invention is applied to a stock. One day before the last day, with $F1_{t-1}$, $F2_{t-2}$, $F3_{t-1}$, $F4_{t-1}$ =H, the stock price y curve continued to ascend at least for 4p, that is 16 days, and then the mark disappeared with $F1_t$=" " and an extreme value mark X4U is detected with $F2_t$, $F3_t$, $F4_t$=H.

The curves and the signs on the display are indicated in a preset color and shape. Especially, color-discriminated F=H and F=L time series can be read out at a glance in terms of the wave characteristics of the stock price y curve. Further, after the monitor curve $SY_t$ hits an extreme value, the assumed moments S2 and S1 of $SY_{t+1}$ of the assumed stock prices 4500 yen, 4600 yen, and 4700 yen are indicated by ○. If the assumed stock price rises to at least 4700 yen, the stock price is decided to have nearly stopped descending.

FIG. 8 shows one example of dollar/yen exchange where the present invention is applied to the exchange market. When y curve hovers directly presently, the $F1_t$~$F5_t$ mark appear scarcely. The stock brand is also retrieved and selected by specifying "NNNNL" as an array of the classification-specific marks $F1_t$, $F2_t$, $F3_t$, $F4_t$, and $F5_t$ of the constant moments S1～S5 of the monitor curve $SY_t$. In this case, "N" is " ".

Superiority of the present invention:

1) time series loci are regularized into H, L, and N waves from a macroscopic view point as well as a microscopic viewpoint;

2) stock brands which locus, tranfomed along time series should be preferable from a viewpoint of management matches for the purpose of control ; and

3) a method operated process by the computer replaces a process for permitting a person to watch the time series chart for decision and understanding. The objects, even if numerous, can all be monitored and managed.

[1] In the case of stock, exchange, and commodity markets:

To implement efficient investment, the following conditions are indispensable:

1) a group is selected which includes such stock brands that the current price thereof hit a bottom (peak);

2) from this group are selected and bought (sold) such a stock brand that has a high possibility of turning positive and an expected large value thereof; and

3) this stock brand is sold (bought) at a moment when it turned and its current price hit the peak (bottom).

To select from among more than 3000 domestic stock brands such a stock brand that the current price thereof is at or approaching an extreme value in an appropriate investment period, chart reading is indispensable for permitting a person to watch the charts of all the stock brands each time data is added newly, which work is impossible to do in fact but can be implemented by the present invention, thus monitoring all the stock brands. Whether a locus of such a stock brand exhibits as expected can be known in an overall image by the monitor curve SY and the F time series of classification marks, so that the correlation between the current price and the extreme value can be supported and understood both concretely and logically only at a look at the last term of the time series on the display.

[2] In the case of enterprise activities;

Daily management product groups, many management items, achievements of each department, etc. represented by POS activities can be read into a computer, so that transients of changes of all the objects can be immediately selected into classifications suitable for management for discussion, thus arranging them for solution to the TQC enterprise project.

[3] In the case of health control;

The data of body temperatures, blood pressures, pulses, etc. of many objects is read into a computer, so that the present states of an unhealthy one etc. can be known immediately with respect to his normal value of the data.

[4] In the case of nature, science, and environment observation data;

As one example of many cases where the phenomenon of nature, science, and environments are observed, the data of an abnormal site, a moment, and a changing state of an air pollution degree, NOx, etc. in urban areas observed at each observation site can be sensed mechanically upon reception, thus making countermeasures systematically.

In any other examples in which time series data needs to be sampled, a locus suitable for a management purpose thereof can be drawn to pick up an object that changed resultantly and, further, its state can be visually appealed directly.

## Claims

**1.** A time series data management method for regularizing loci of time series data, comprising the steps of:

1) inputting one series of time series raw data (D) ;
2) calculating a smoothing time series (y) and a short-period moving trend value time series (b1) which are induced in a short period interval (p+1);
3) calculating a moving trend value time series {bn: b1, b2, ...}, which is a time series locus of an arbitrary constant moment {Sn: S1, S2, ...} of a monitor curve ($SY_t$) made up of trend values calculated in intervals expanded arithmetic progression-wise from said interval (p+1) as multiplied by n*2 consecutively as dating back from the current moment;
4) calculating a standardized time series {Bn: B1, B2, ...} from said moving trend value time series {bn: b1, b2, ...};
5) calculating a classification time series {Fn: F1, F2, ...} from said moving trend value time series {bn: b1, b2, ...} and said standardized time series {Bn: B1, B2, ...}; and
6) a last term of said classification time series {$Fn_t$: $F1_t$, $F2_t$, ...}, a classification of {Sn: S1, S2, ...} of said monitor curve $SY_t$, and a pattern group of said smoothing time series (y), raw time series (D) are determined in this order.

**2.** The time series data management method according to claim 1, wherein said moving trend value time series {bn: b1, b2, ...}, said standardized time series {Bn: B1, B2, ...}, and said classification time series {Fn: F1, F2, ...} are called in time series to detect an extreme value signal (OP$= $X_U$,$X_L$) or approach signal (OP$= $T_U$,$T_L$) , thus selecting an object at a moment of an extreme value or directly approaching the extreme value.

**3.** The time series management method according to claim 1, wherein a configuration of said last term of said classification time series {$Fn_t$: $F1_t$, $F2_t$, ...} is specified to select the relevant object.

**4.** The time series data management method according to claim 1, wherein the number of classification symbol ($Fn_t$=H, $Fn_t$=L) in said last term of said classification time series {$Fn_t$: $F1_t$, $F2_t$, ...} is specified to select the relevant object.

**5.** The time series data management method according to any one of claims 1~4, wherein each time new data is added through an input device, such objects are regularized and extracted as to exhibit a time series locus required in management.

**6.** The time series data management method according to claim 5, the objects are selected more than two and grouped for each regularization.

**7.** The time series data management method according to any one of claims 1~6, comprising a step for distributing information etc, including a step for selecting a file of the selected objects.

**8.** The time series data management method according to any one of claims 1~7, said method is implemented through an electric communication line such as the internet, a computer network, a broadcast network etc.

**9.** An information disclosing apparatus for disclosing object related information using the time series data management method according to any one of claims 1~6, comprising:

1) input means for inputting new time series data;
2) storage means for storing time series raw data (D);
3) arithmetic means for calculating time series of the smoothing value (y), the moving trend value (bn), the standardization (Bn) thereof, the classification time series (Fn), each detection mark (OP$= ), defines from the time series(D) ;
4) means for outputting or distributing the file of the detection-subject file from said storage means;
5) received means for inputting an calculation-subject output from said storage means or reception or input means for receiving distributed information; and
6) means for outputting information, as visually represented, of a correlation among the time series data (D), the smoothing value (y) time series, a time series (bn), which is a locus of the constant moments of the monitor curve ($SY_t$), and a classification time series thereof (Fn).

**10.** Readable recording means for storing a program for performing a method for, for example, regularizing, selecting, and detecting loci of objects, wherein as said method is employed the time series data management method according to any one of claims 1~8.

**11.** Readable recording means for storing a program for operating a display for visually displaying information about regularization, selection, detection, etc. of the loci of the objects, wherein as said display is employed the information disclosing apparatus ac-

cording to claim 9.

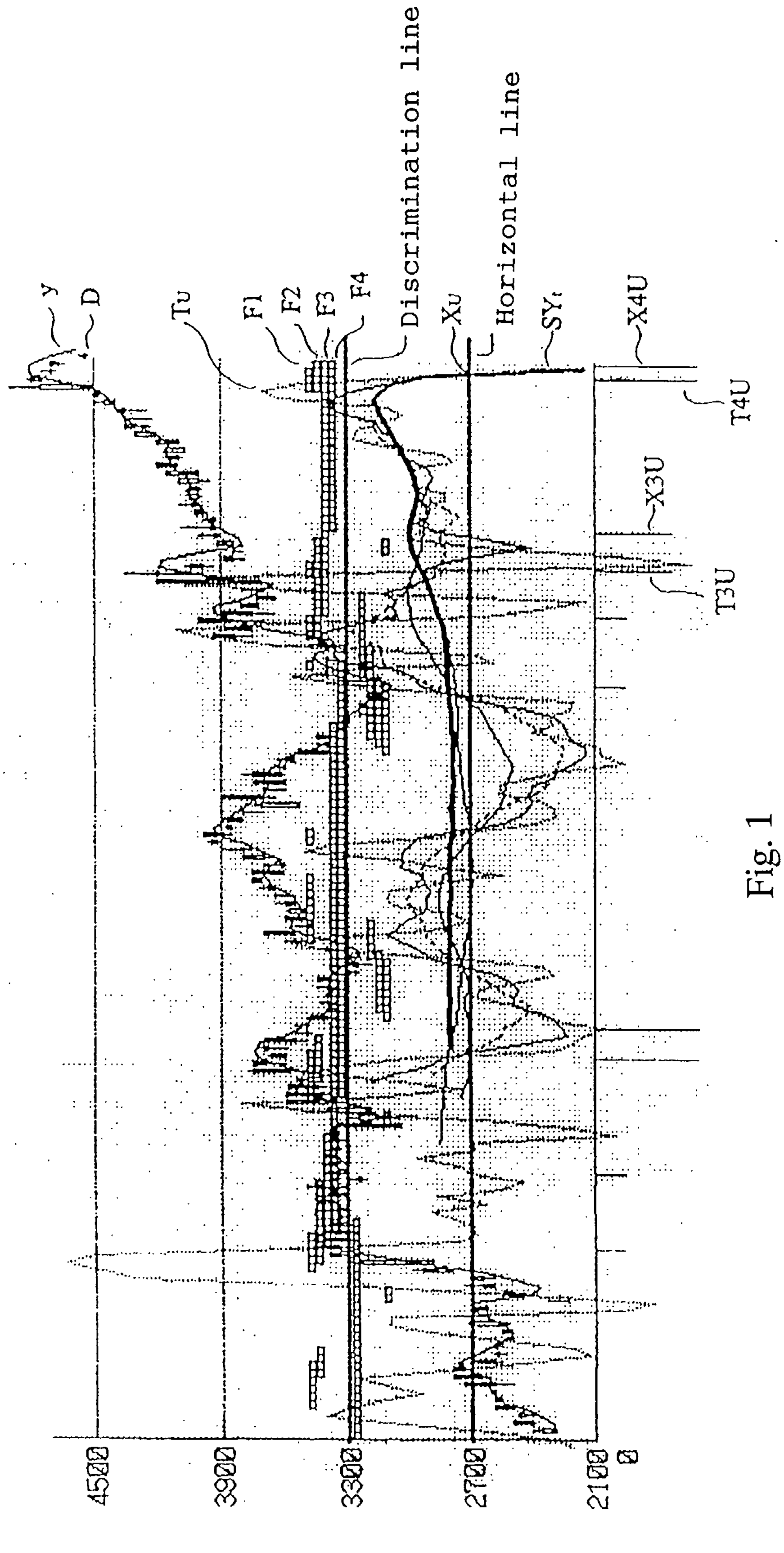
y
D
Tu
F1
F2
F3
F4
Discrimination line
Xu
Horizontal line
SYt
X4U
T4U
X3U
T3U
4500
3900
3300
2700
2100
0

Fig. 1

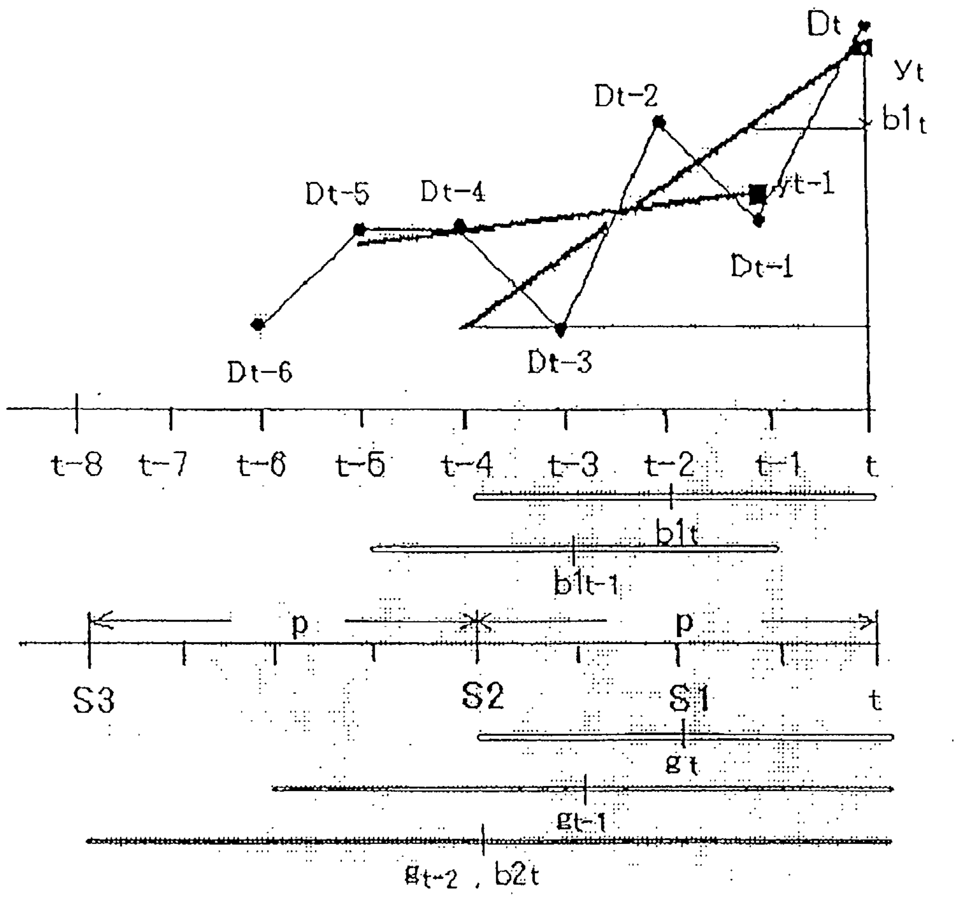
Dt
yt
b1t
Dt-2
Dt-5
Dt-4
yt-1
Dt-1
Dt-6
Dt-3
t-8
t-7
t-6
t-5
t-4
t-3
t-2
t-1
t
b1t
b1t-1
p
p
S3
S2
S1
t
gt
gt-1
gt-2 , b2t

Fig. 2

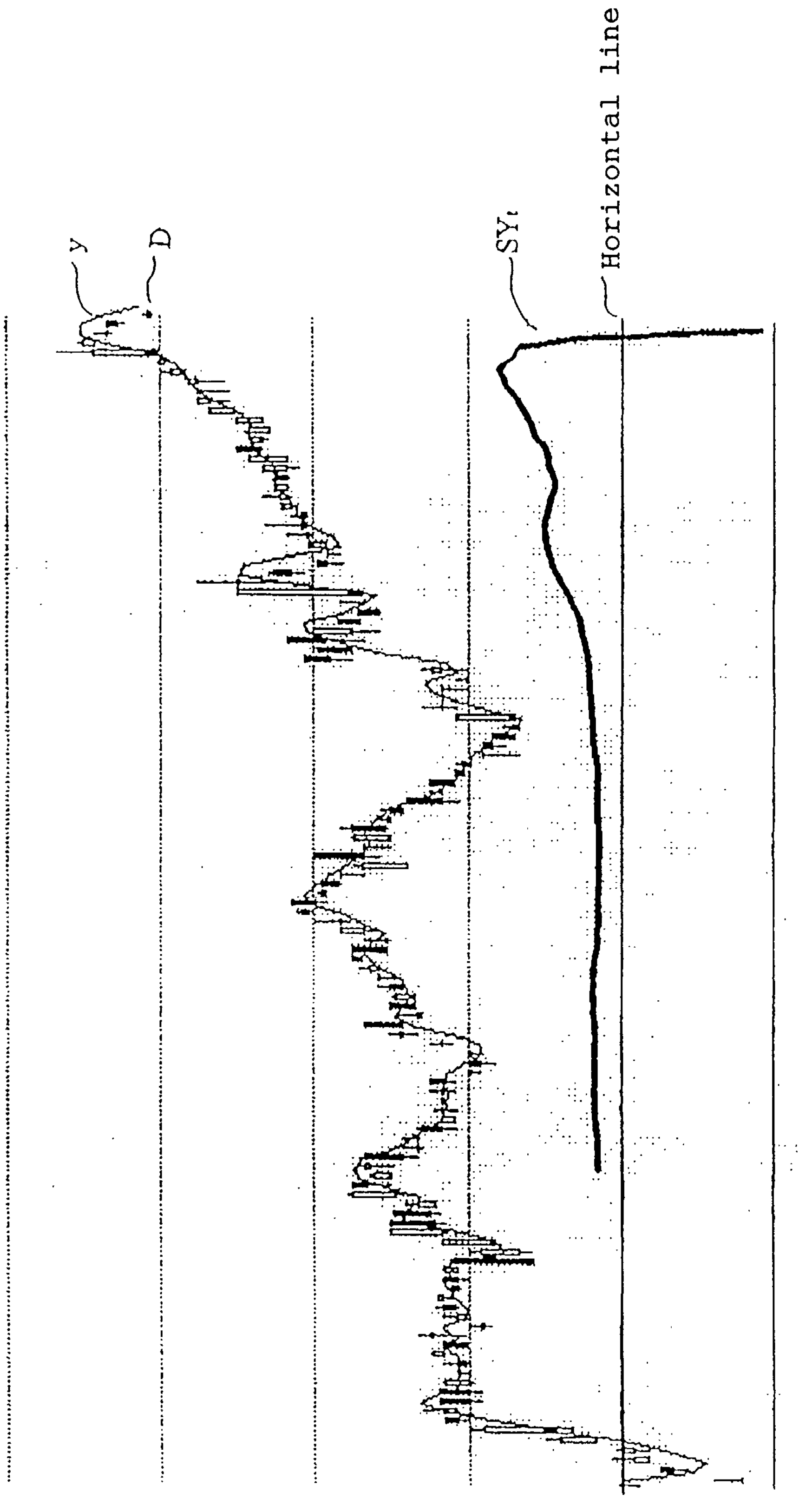


Fig. 3

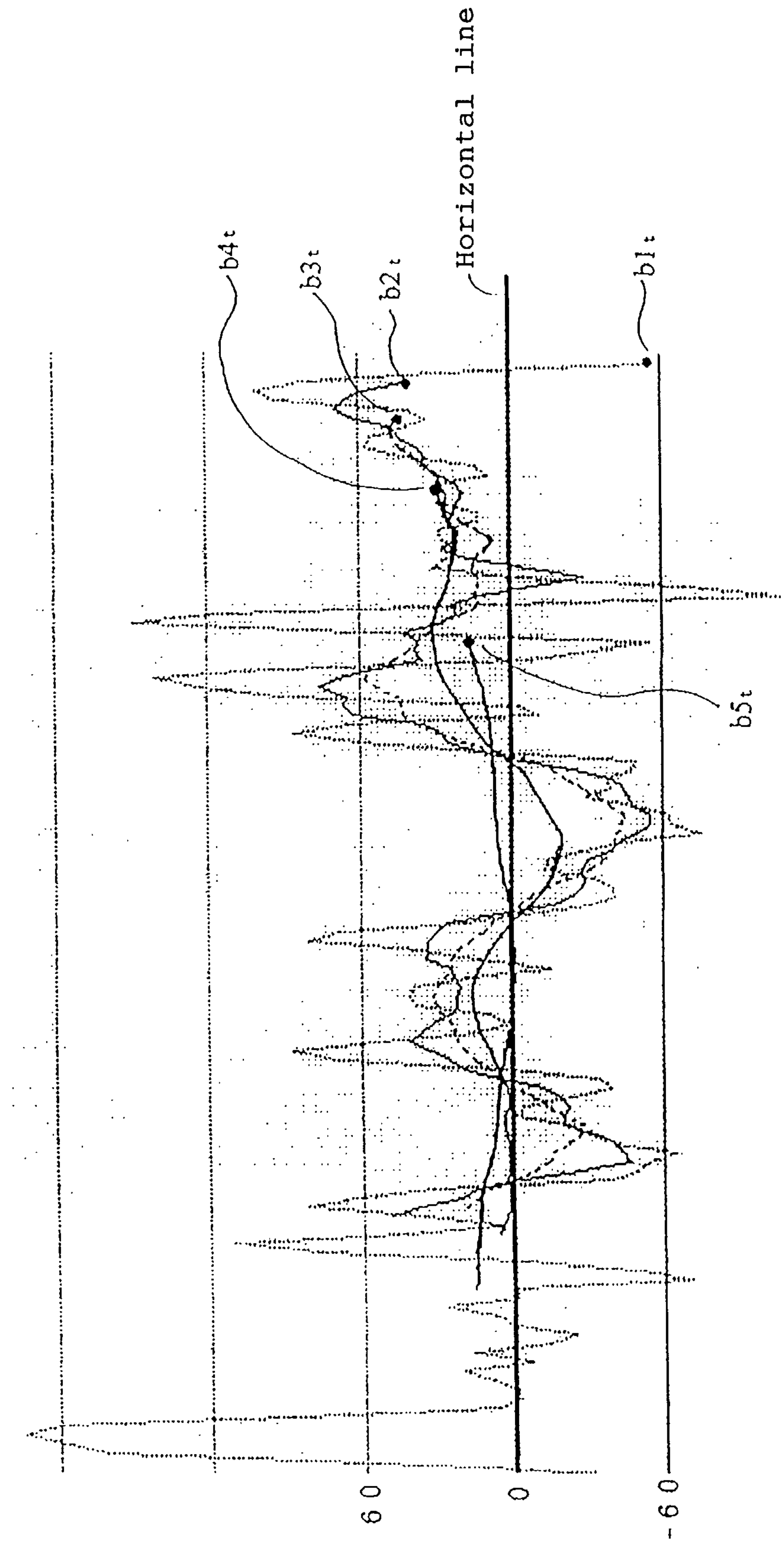


Fig. 4

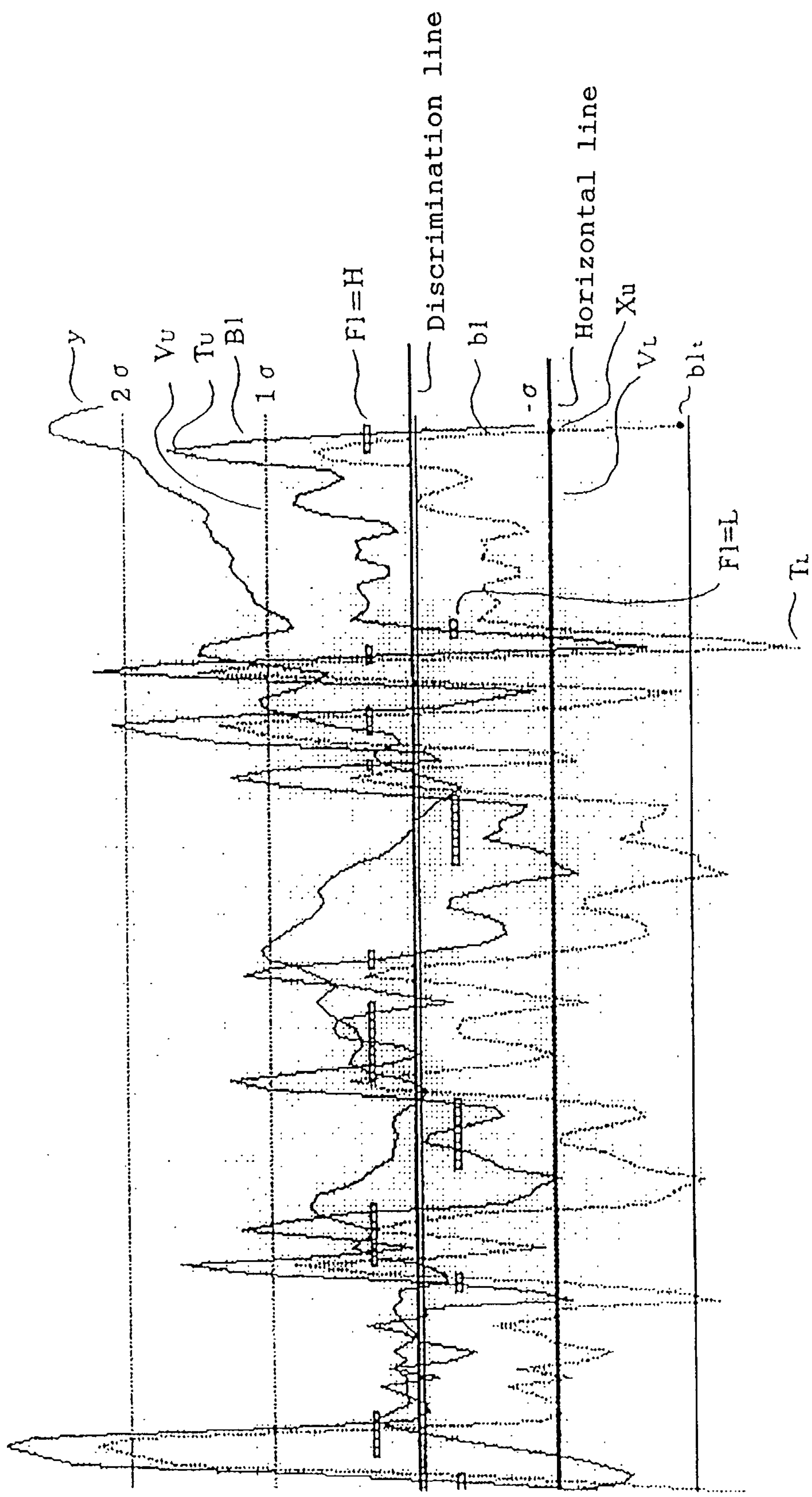
y
2σ
VU
TU
Bl
1σ
Fl=H
Discrimination line
bl
-σ
Horizontal line
Xu
VL
Fl=L
TL

Fig. 5

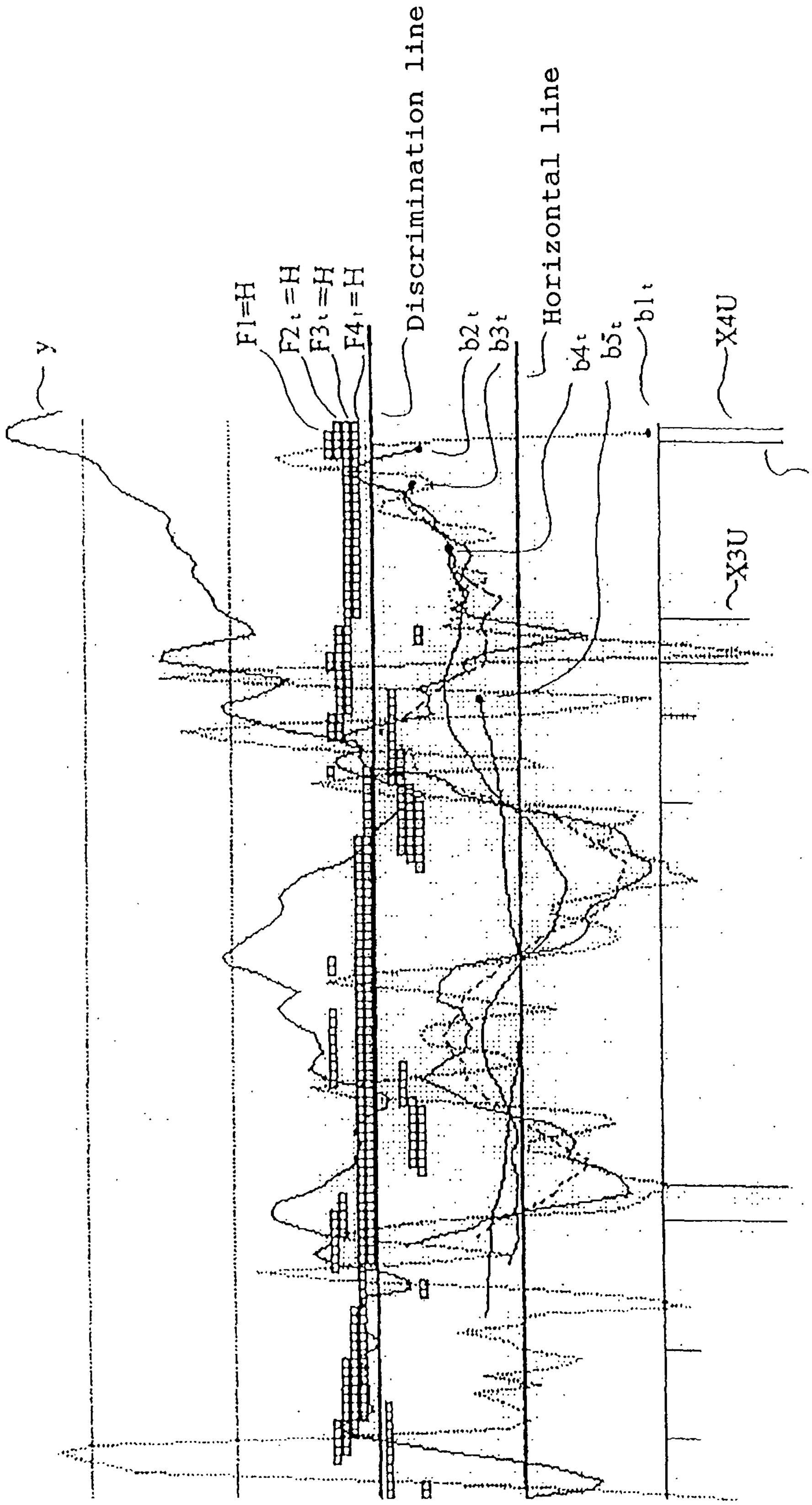
y
F1=H
F2t=H
F3t=H
F4t=H
Discrimination line
b2t
b3t
Horizontal line
b4t
b5t
b1t
X4U
T4U
X3U

Fig. 6

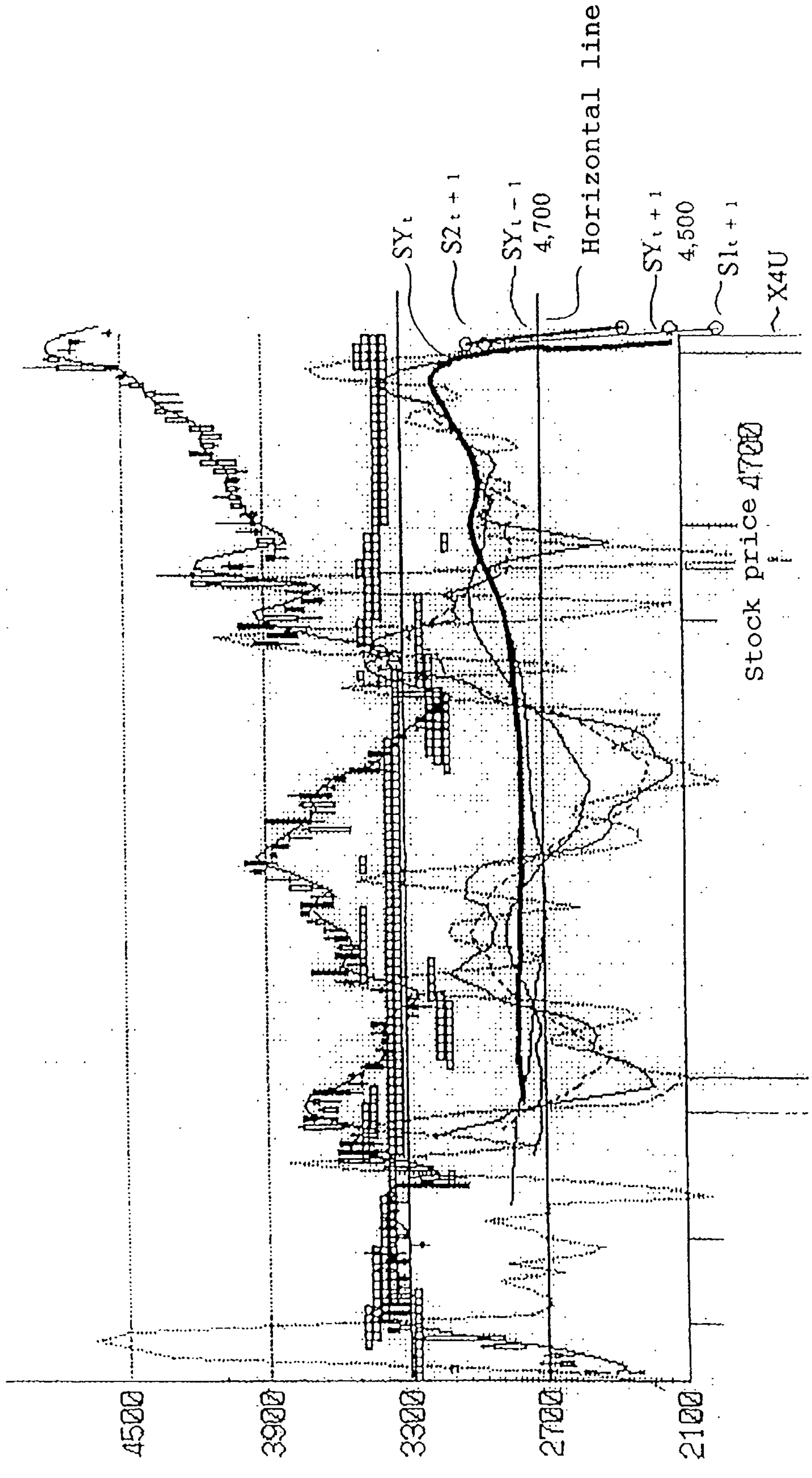
SY_t
S2_{t+1}
SY_{t-1}
4,700
Horizontal line
SY_{t+1}
4,500
S1_{t+1}
X4U
Stock price 4700
4500
3900
3300
2700
2100

Fig. 7

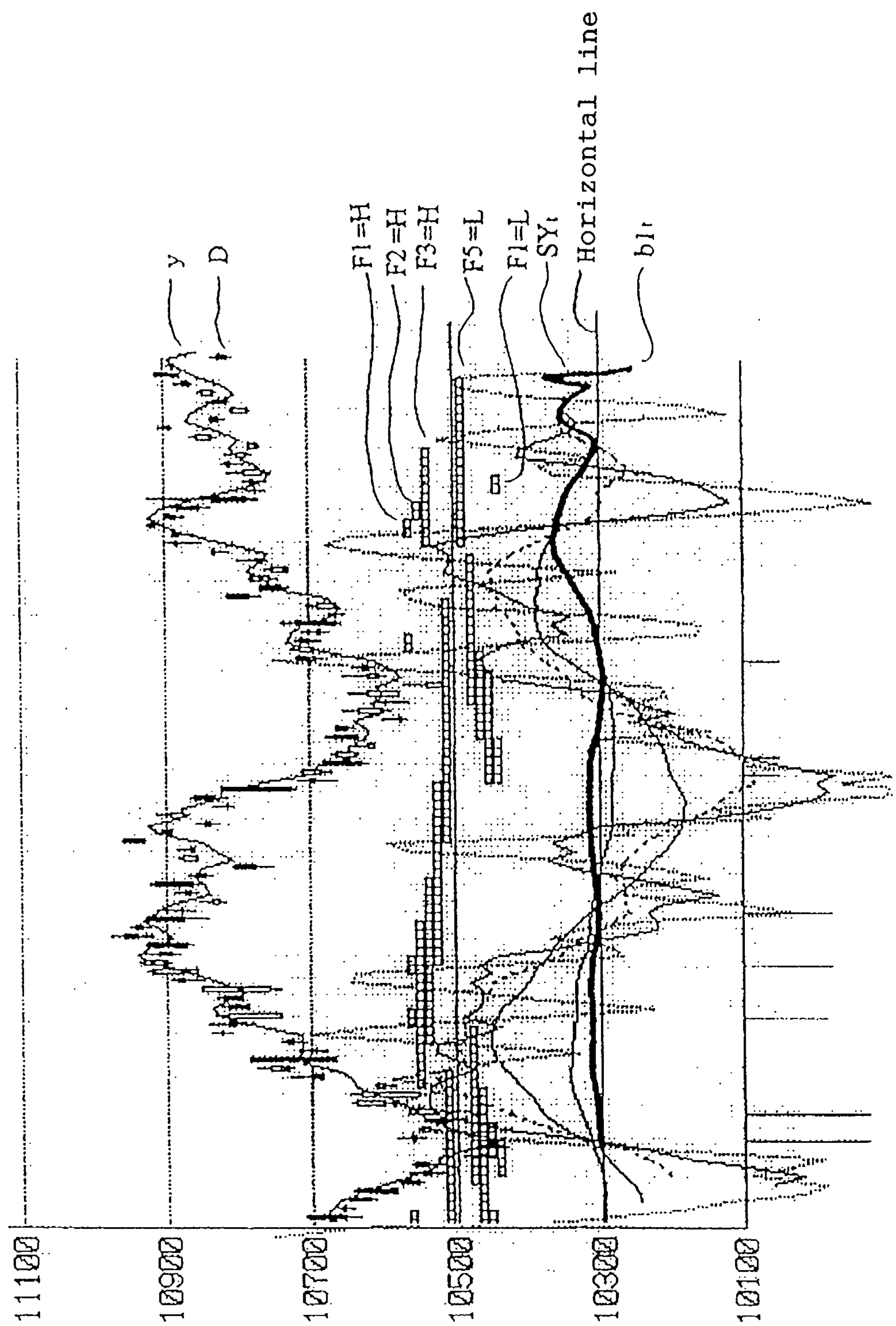
y
D
F1=H
F2=H
F3=H
F5=L
F1=L
SYt
Horizontal line
blt
11100
10900
10700
10500
10300
10100

Fig. 8

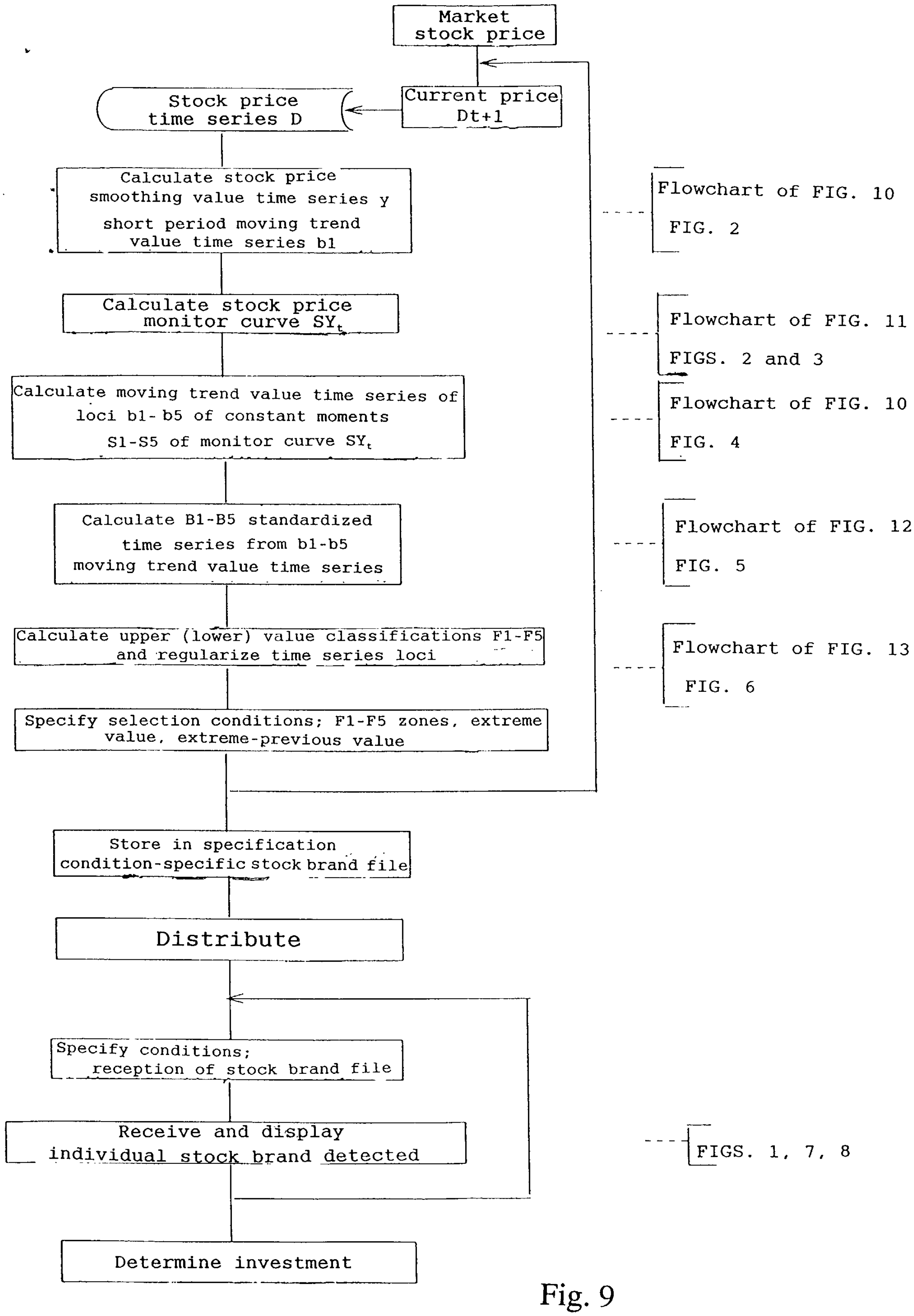
Market stock price
Current price Dt+1
Stock price time series D
Calculate stock price smoothing value time series y short period moving trend value time series b1
Calculate stock price monitor curve $SY_t$
Calculate moving trend value time series of loci b1-b5 of constant moments S1-S5 of monitor curve $SY_t$
Calculate B1-B5 standardized time series from b1-b5 moving trend value time series
Calculate upper (lower) value classifications F1-F5 and regularize time series loci
Specify selection conditions; F1-F5 zones, extreme value, extreme-previous value
Store in specification condition-specific stock brand file
Distribute
Specify conditions; reception of stock brand file
Receive and display individual stock brand detected
Determine investment
Flowchart of FIG. 10
FIG. 2
Flowchart of FIG. 11
FIGS. 2 and 3
Flowchart of FIG. 10
FIG. 4
Flowchart of FIG. 12
FIG. 5
Flowchart of FIG. 13
FIG. 6
FIGS. 1, 7, 8

Fig. 9

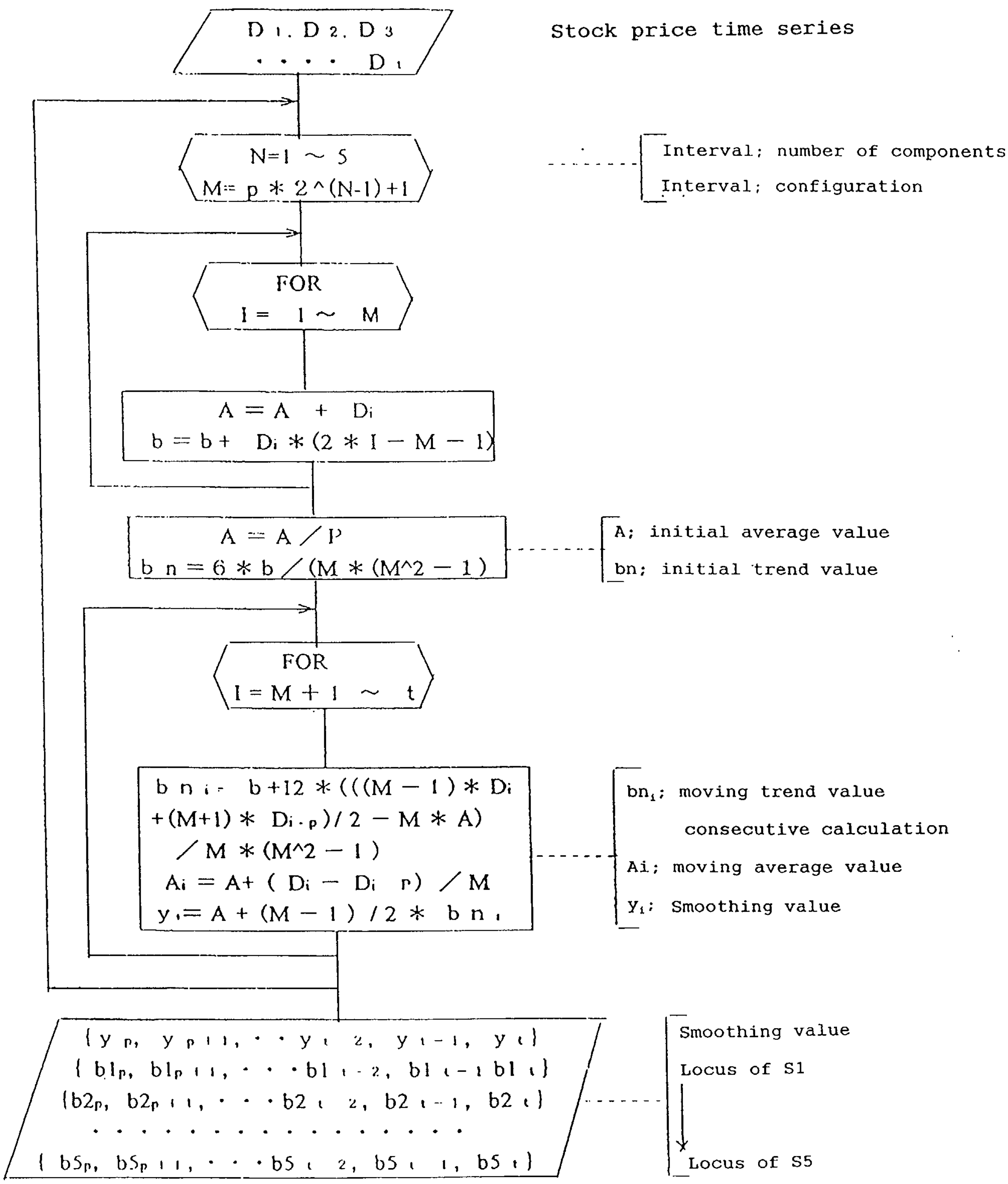
D 1 . D 2 . D 3 · · · · D t
Stock price time series
N=1 ~ 5
M= p * 2 ^ (N-1) +1
Interval; number of components
Interval; configuration
FOR
I = 1 ~ M
A = A + Di
b = b + Di * (2 * I − M − 1)
A = A / P
b n = 6 * b / (M * (M^2 − 1 )
A; initial average value
bn; initial trend value
FOR
I = M + 1 ~ t
b n i = b +12 * (((M − 1 ) * Di
+(M+1) * Di-p )/ 2 − M * A)
/ M * (M^2 − 1 )
Ai = A+ ( Di − Di-p) / M
yi = A + (M − 1 ) / 2 * b n i
bni; moving trend value
consecutive calculation
Ai; moving average value
yi; Smoothing value
{ y p, y p+1, · · y t-2, y t-1, y t }
{ b1p, b1p+1, · · · b1 t-2, b1 t-1 b1 t }
{ b2p, b2p+1, · · · b2 t-2, b2 t-1, b2 t }
· · · · · · · · · · · · · · · · ·
{ b5p, b5p+1, · · · b5 t-2, b5 t-1, b5 t }
Smoothing value
Locus of S1
Locus of S5

Fig. 10

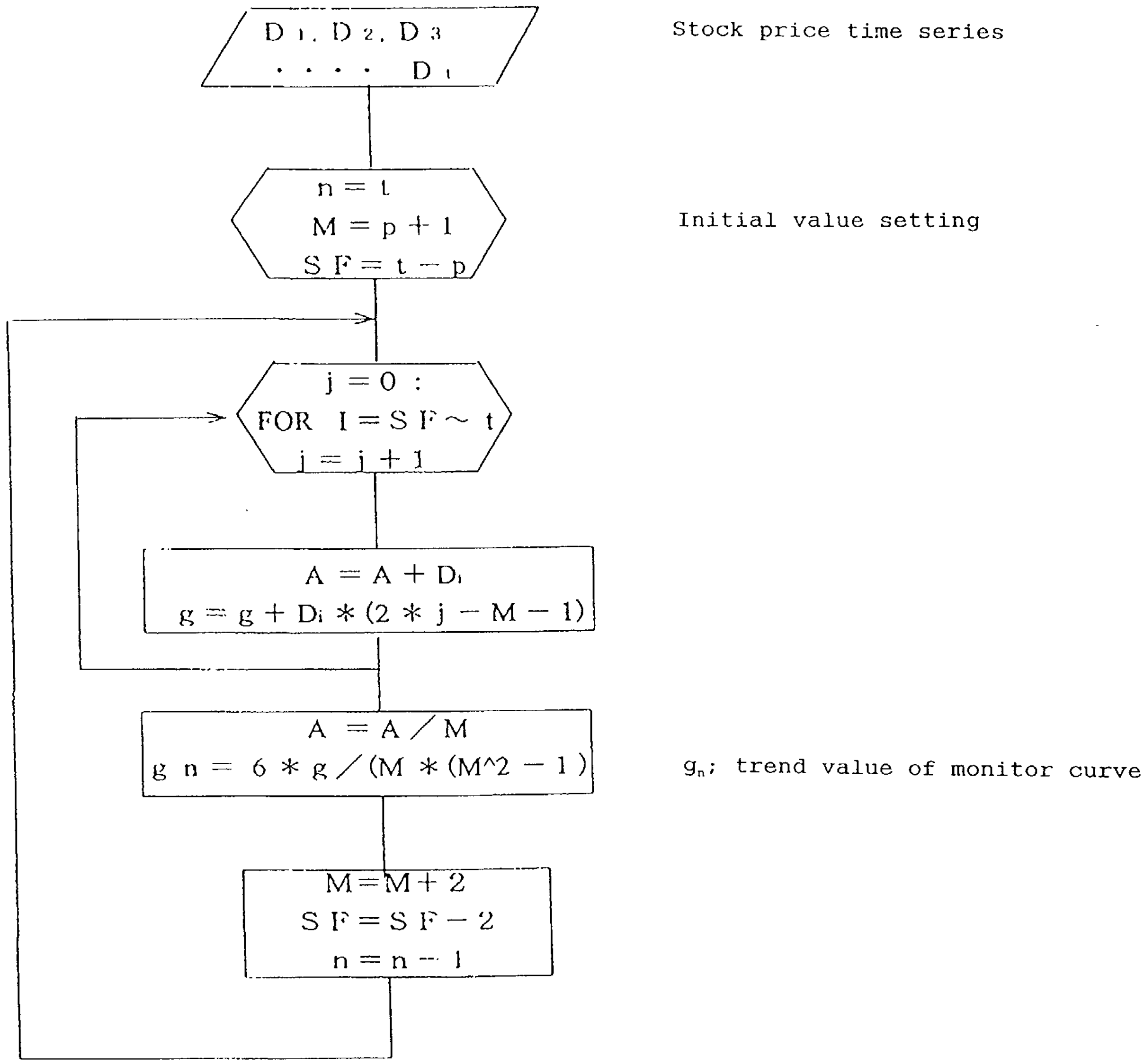
D 1, D 2, D 3
. . . . D t
Stock price time series
n = t
M = p + 1
S F = t − p
Initial value setting
j = 0 :
FOR I = S F ~ t
j = j + 1
A = A + Di
g = g + Di * (2 * j − M − 1)
A = A / M
g n = 6 * g / (M * (M^2 − 1))
gn; trend value of monitor curve
M = M + 2
S F = S F − 2
n = n − 1

Fig. 11

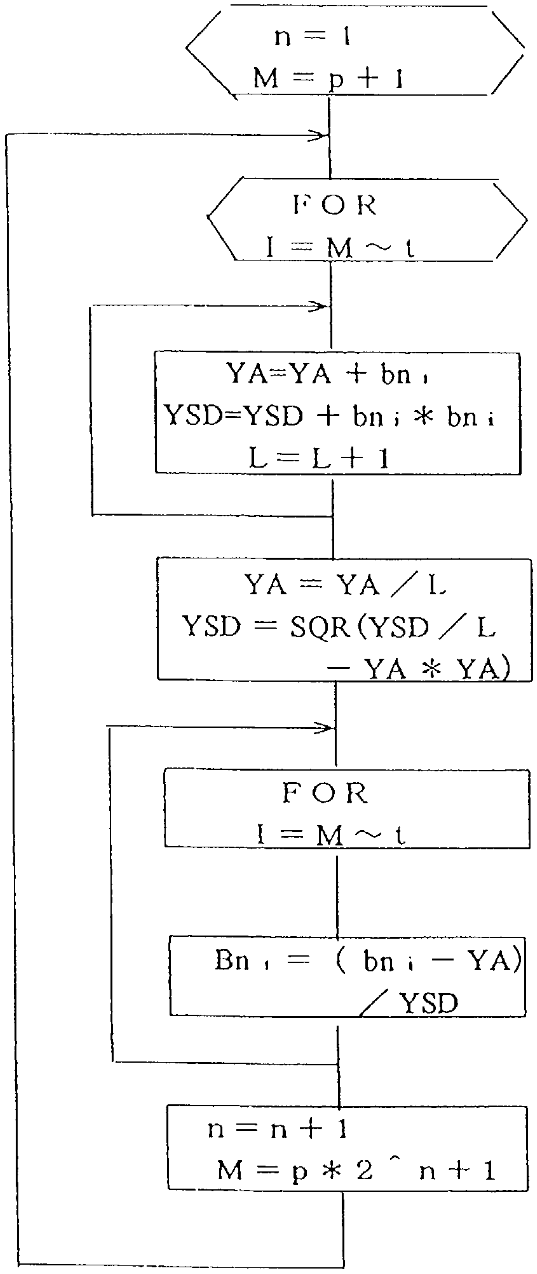


YA; average value

YSD; standard deviation

$Bn_i$; individual reference value

Fig. 12

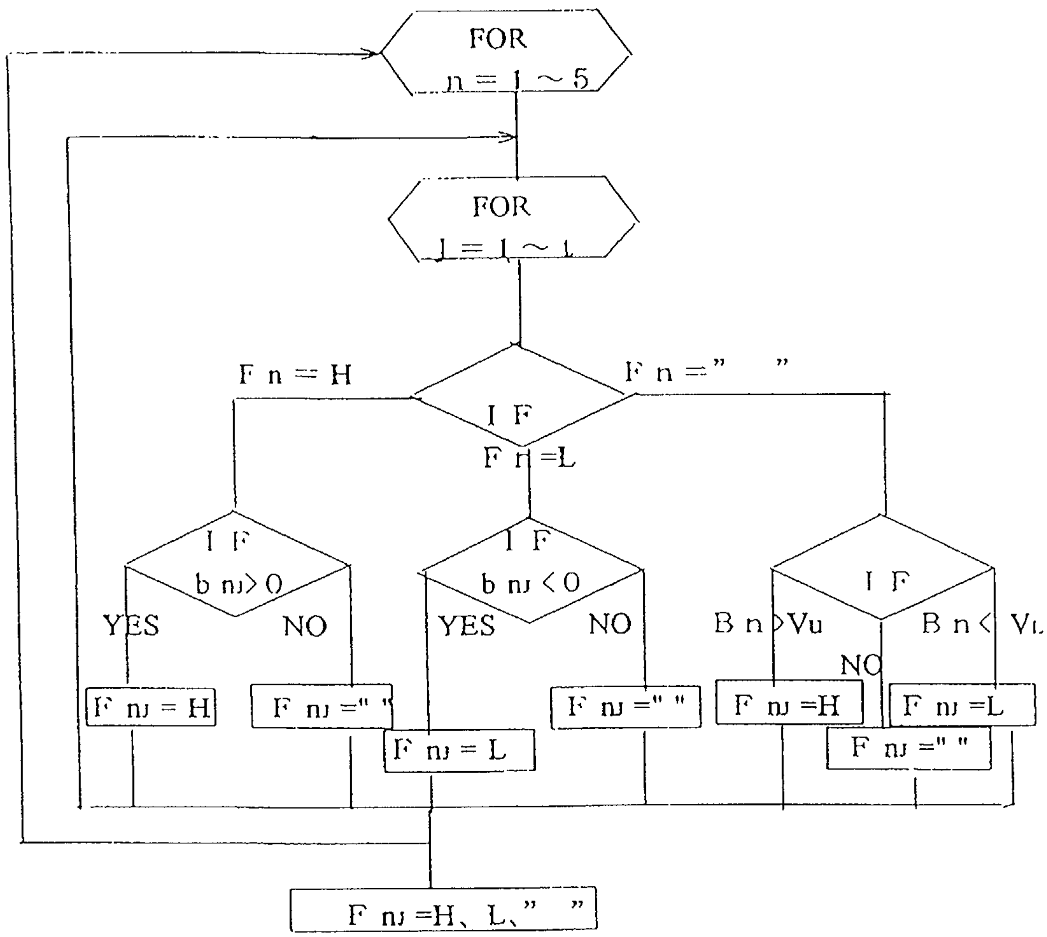
FOR
n = 1 ~ 5
FOR
J = 1 ~ L
F n = H
F n =" "
I F
F n =L
I F
b nJ > 0
YES
NO
I F
b nJ < 0
YES
NO
I F
B n > Vu
B n < VL
NO
F nJ = H
F nJ =" "
F nJ = L
F nJ =" "
F nJ =H
F nJ =L
F nJ =" "
F nJ =H、L、" "

Fig. 13

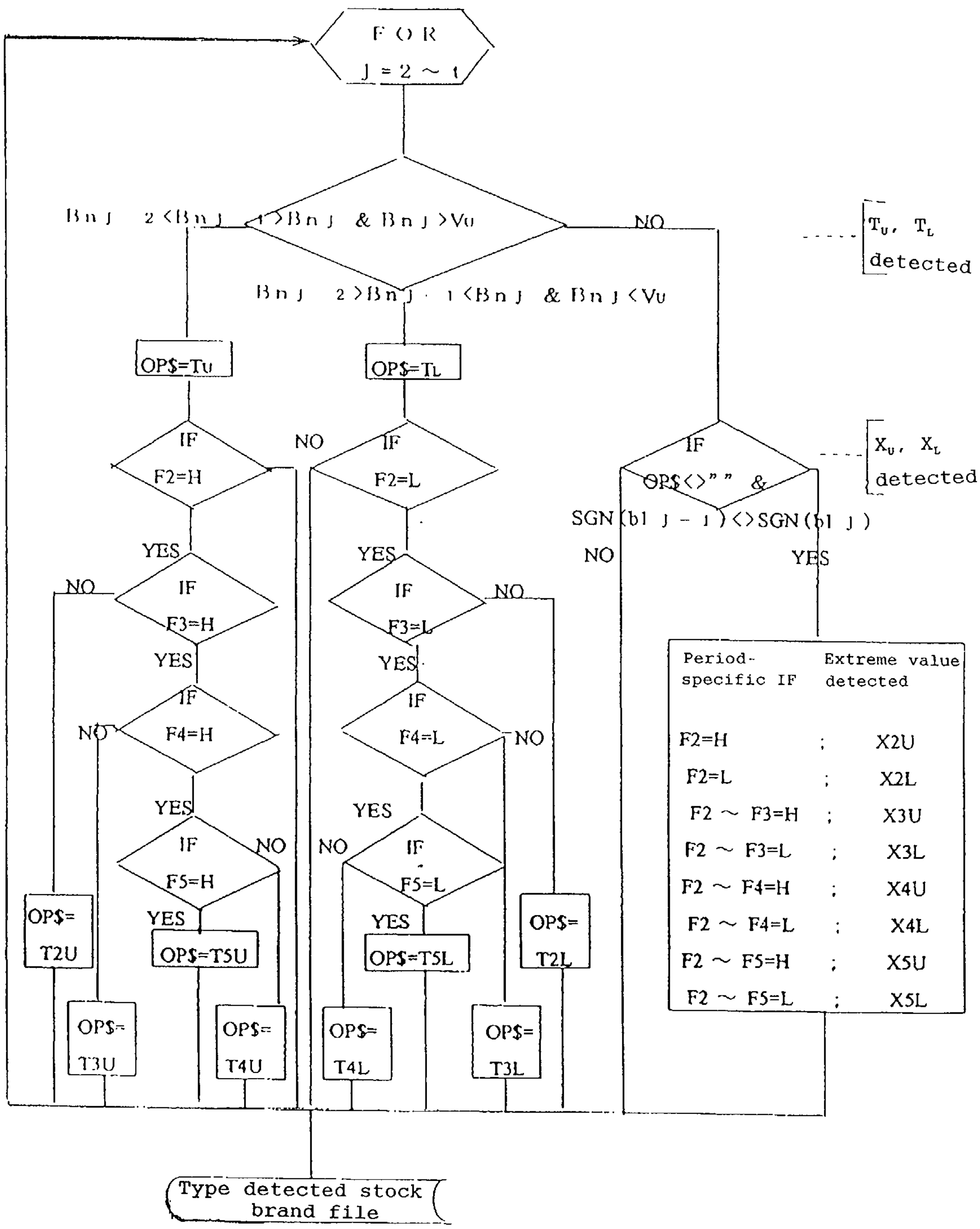
FOR
J = 2 ~ t
Bn j 2 <Bn j 1>Bn j & Bn j >Vu
NO
Bn j 2 >Bn j 1 <Bn j & Bn j <Vu
Tu, TL detected
OP$=Tu
OP$=TL
IF
F2=H
NO
IF
F2=L
IF
OP$<>"" &
SGN(b1 j - 1)<>SGN(b1 j)
Xu, XL detected
NO
YES
YES
YES
IF
F3=H
NO
IF
F3=L
NO
YES
YES
IF
F4=H
NO
IF
F4=L
NO
YES
YES
IF
F5=H
NO
NO
IF
F5=L
YES
YES
OP$=T2U
OP$=T5U
OP$=T5L
OP$=T2L
OP$=T3U
OP$=T4U
OP$=T4L
OP$=T3L
Period-specific IF
Extreme value detected
F2=H ; X2U
F2=L ; X2L
F2 ~ F3=H ; X3U
F2 ~ F3=L ; X3L
F2 ~ F4=H ; X4U
F2 ~ F4=L ; X4L
F2 ~ F5=H ; X5U
F2 ~ F5=L ; X5L
Type detected stock brand file

Fig. 14

# List of symbols in drawings

| | | Interval | Standardization |
|---|---|---|---|
| D | y Smoothing value curve | P + 1 | |
| Stock price time series | b1 short period moving trend value curve | P + 1 | B1 |
| | SY monitor curve | >= (P + 1) | |
| Calculation | b2 moving trend value curve | 2 P + 1 | B2 |
| | b3 // | 4 P + 1 | B3 |
| | b4 // | 8 P + 1 | B4 |
| | b5 // | 16 P + 1 | B5 |

Constant moment of monitor curve

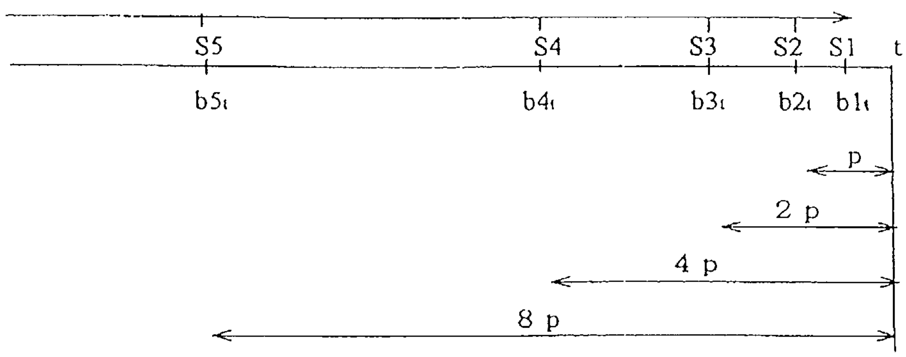


| Standardization | Classification | | | Period-specific stock brand detection classification OP$= | | | |
|---|---|---|---|---|---|---|---|
| | Classification line | | Classification symbol | Extreme value-previous signal | | Extreme value signal | |
| | Above | Below | Above (Below) | Above | Below | Above | Below |
| B1 | VU | VL | F1 = H (L) | TU | TL | XU | XL |
| B2 | VU | VL | F2 = H (L) | T2U | T2L | X2U | X2L |
| B3 | VU | VL | F3 = H (L) | T3U | T3L | X3U | X3L |
| B4 | VU | VL | F4 = H (L) | T4U | T4L | X4U | X4L |
| B5 | VU | VL | F5 = H (L) | T5U | T5L | X5U | X5L |

Fig. 15

European Patent Office

**DECLARATION**

which under Rule 45 of the European Patent Convention shall be considered, for the purposes of subsequent proceedings, as the European search report

Application Number
EP 02 01 2244

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---

-----

| Place of search | Date | Examiner |
|---|---|---|
| MUNICH | 26 September 2002 | Glaser, N |

EPO FORM 1504 (P04C37)